(19) Europäisches Patentamt
European Patent Office
Office européen des brevets

(11) **EP 4 561 118 A1**

(12) **EUROPEAN PATENT APPLICATION**
published in accordance with Art. 153(4) EPC

(43) Date of publication:
**28.05.2025 Bulletin 2025/22**

(51) International Patent Classification (IPC):
*H04W 4/02* (2018.01)

(21) Application number: **23849053.6**

(52) Cooperative Patent Classification (CPC):
**H04W 4/02; H04W 24/04; H04W 52/02; H04W 64/00**

(22) Date of filing: **09.06.2023**

(86) International application number:
**PCT/CN2023/099533**

(87) International publication number:
**WO 2024/027343 (08.02.2024 Gazette 2024/06)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **01.08.2022 CN 202210916867**

(71) Applicant: **Huawei Technologies Co., Ltd.**
**Shenzhen, Guangdong 518129 (CN)**

(72) Inventors:
• **MOU, Xin**
**Shenzhen, Guangdong 518129 (CN)**
• **ZHOU, Runze**
**Shenzhen, Guangdong 518129 (CN)**

(74) Representative: **Pfenning, Meinig & Partner mbB**
**Patent- und Rechtsanwälte**
**Theresienhöhe 11a**
**80339 München (DE)**

(54) **POSITIONING METHOD AND APPARATUS**

(57) A positioning method and an apparatus are provided, and relate to the field of communication technologies, to alleviate a technical problem of a positioning failure caused by a discontinuous positioning service when a same assistance terminal device performs assisted ranging/sidelink positioning. The method includes: A first terminal device sends a first request to a first assistance terminal device, and receives a first measurement result from the first assistance terminal device. The first request is used to request a relative position between the first terminal device and a second terminal device, and the first request includes identification information of the second terminal device and periodicity information indicating a measurement periodicity. If the first terminal device determines that the first assistance terminal device cannot perform assistive measurement in a next measurement periodicity, the first terminal device sends the first request to a second assistance terminal device, and receives a second measurement result from the second assistance terminal device. The measurement result indicates the relative position between the first terminal device and the second terminal device.

FIG. 10

## Description

This application claims priority to Chinese Patent Application No. 202210916867.6, filed with the China National Intellectual Property Administration on August 1, 2022 and entitled "POSITIONING METHOD AND APPARATUS", which is incorporated herein by reference in its entirety.

## TECHNICAL FIELD

This application relates to the field of communication technologies, and in particular, to a positioning method and an apparatus.

## BACKGROUND

In a communication system, if direct ranging/-sidelink positioning between a terminal device 1 and a terminal device 2 cannot be implemented or a measurement result cannot meet a preset requirement (for example, the measurement result cannot meet a precision requirement), the terminal device 1 may initiate a discovery procedure for an assistance terminal device. The assistance terminal device separately performs ranging/-sidelink positioning on the terminal device 1 and the terminal device 2, to obtain a measurement result between the assistance terminal device and the terminal device 1 and a measurement result between the assistance terminal device and the terminal device 2. A relative position between the terminal device 1 and the terminal device 2 may be determined based on the two measurement results.

The assistance terminal device may periodically perform ranging/sidelink positioning measurement on the terminal device 1 and the terminal device 2, to periodically determine the relative position between the terminal device 1 and the terminal device 2.

However, for a periodic ranging/sidelink positioning method in which the assistance terminal device participates, when a distance between the terminal device and the assistance terminal device increases, the assistance terminal device may fail to continue assistive measurement. Consequently, a positioning service may be discontinuous, resulting in a positioning failure.

## SUMMARY

Embodiments of this application provide a positioning method and an apparatus, to alleviate a technical problem of a positioning failure caused by a discontinuous positioning service when a same assistance terminal device performs assisted ranging/sidelink positioning.

According to a first aspect, an embodiment of this application provides a positioning method. The method may include: A first terminal device sends a first request to a first assistance terminal device, and receives a first measurement result from the first assistance terminal device. The first request is used to request a relative position between the first terminal device and a second terminal device, the first request includes identification information of the second terminal device and periodicity information, and the periodicity information indicates a measurement periodicity. If the first terminal device determines that the first assistance terminal device cannot perform assistive measurement in a next measurement periodicity, the first terminal device sends the first request to a second assistance terminal device, and receives a second measurement result from the second assistance terminal device. The measurement result indicates the relative position between the first terminal device and the second terminal device.

According to the first aspect, the first terminal device may send the first request to the first assistance terminal device, to implement periodic ranging/sidelink positioning that is based on the first assistance terminal device. If the first terminal device determines that the first assistance terminal device cannot perform assistive measurement in the next periodicity, the first terminal device may send the first request to the second assistance terminal device, to perform periodic ranging/sidelink positioning by using the second assistance terminal device. This avoids interruption of a positioning service caused because the first assistance terminal device cannot continue the assistive measurement, ensures continuity of the positioning service in an assistance terminal device handover scenario, and increases a positioning success rate.

In a possible design, the first request further includes one or more of the following: a measurement result type, a quality of service requirement, and first indication information. The measurement result type includes one or more of the following: a distance, a direction, and an angle. The quality of service requirement includes one or more of the following: a precision requirement, a latency requirement, a reliability requirement, and an integrity requirement of the measurement result. The first indication information indicates to perform measurement by using the assistance terminal device.

In a possible design, the first terminal device receives second indication information from the first assistance terminal device, and determines, based on the second indication information, that the first assistance terminal device cannot perform assistive measurement in the next measurement periodicity. The second indication information indicates that the assistive measurement is terminated.

Based on the possible design, the first terminal device may determine, based on the second indication information, that the first assistance terminal device cannot perform assistive measurement in the next measurement periodicity. In comparison with a case in which the first terminal device independently determines that the first assistance terminal device cannot perform assistive measurement in the next measurement periodicity, the possible design can reduce processing complexity of the first terminal device, and reduce power consumption.

In a possible design, if a first condition is met, the first terminal device determines that the first assistance terminal device cannot perform assistive measurement in the next measurement periodicity. The first condition includes one or more of the following: A distance between the first terminal device and the first assistance terminal device is greater than or equal to a preset distance, a moving speed of the first terminal device relative to the first assistance terminal device is greater than or equal to a preset speed, signal strength of a first signal is less than or equal to preset signal strength, and a difference between a direction of the first signal and a preset direction is greater than or equal to a preset difference. The first signal is a signal received by the first terminal device from the first assistance terminal device.

In a possible design, the first terminal device periodically determines, based on the first condition, whether the first assistance terminal device supports assistive measurement in the next measurement periodicity.

Based on the foregoing two possible designs, the first terminal device may determine, based on the first condition, that the first assistance terminal device cannot perform assistive measurement in the next measurement periodicity. In comparison with a case in which the first terminal device determines, based on the second indication information, that the first assistance terminal device cannot perform assistive measurement in the next measurement periodicity, the possible designs can reduce signaling overheads.

According to a second aspect, an embodiment of this application provides a positioning method. The method may include: A first assistance terminal device receives a first request from a first terminal device, and sends a first measurement result to the first terminal device. The first request is used to request a relative position between the first terminal device and a second terminal device, the first request includes identification information of the second terminal device and periodicity information, the periodicity information indicates a measurement periodicity, and the measurement result indicates the relative position between the first terminal device and the second terminal device. If the first assistance terminal device cannot perform assistive measurement in a next measurement periodicity, the first assistance terminal device sends second indication information to the first terminal device. The second indication information indicates that the assistive measurement is terminated.

According to the second aspect, the first assistance terminal device may implement, based on the first request sent by the first terminal device, periodic ranging/sidelink positioning that is based on the first assistance terminal device. If the first assistance terminal device cannot perform assistive measurement in the next periodicity, the first assistance terminal device may send the second indication information to the first terminal device. The first terminal device may search, based on the second indication information, for a second assistance terminal device to perform periodic ranging/sidelink positioning. This avoids interruption of a positioning service caused because the first assistance terminal device cannot continue the assistive measurement, ensures continuity of the positioning service in an assistance terminal device handover scenario, and increases a positioning success rate.

In a possible design, the first request further includes one or more of the following: a measurement result type, a quality of service requirement, and first indication information. The measurement result type includes one or more of the following: a distance, a direction, and an angle. The quality of service requirement includes one or more of the following: a precision requirement, a latency requirement, a reliability requirement, and an integrity requirement of the measurement result. The first indication information indicates to perform measurement by using the assistance terminal device.

In a possible design, if a second condition is met, the first assistance terminal device determines that the assistive measurement cannot be performed in the next measurement periodicity. The second condition includes one or more of the following: A distance between the first terminal device and the first assistance terminal device is greater than or equal to a preset distance, a moving speed of the first terminal device relative to the first assistance terminal device is greater than or equal to a preset speed, signal strength of a second signal is less than or equal to preset signal strength, and a difference between a direction of the second signal and a preset direction is greater than or equal to a preset difference. The second signal is a signal received by the first assistance terminal device from the first terminal device.

In a possible design, the first assistance terminal device periodically determines, based on the second condition, whether assistive measurement is supported in the next measurement periodicity.

Based on the foregoing two possible designs, the first assistance terminal device may determine, based on the second condition, whether assistive measurement is supported in the next measurement periodicity, to provide a feasible solution for the first assistance terminal device to determine whether assistive measurement is supported in the next measurement periodicity.

According to a third aspect, an embodiment of this application provides a positioning method. The method may include: A first terminal device sends a first request to a first assistance terminal device, and receives a first measurement result from the first assistance terminal device. The first request is used to request a relative position between the first terminal device and a second terminal device, the first request includes identification information of the second terminal device and periodicity information, and the periodicity information indicates a measurement periodicity. The first terminal device receives a second measurement result from one or more second assistance terminal devices. The second measurement result is determined by the second assistance terminal device based on a second request sent by the first assistance terminal device, the second request is used to request the second assistance terminal device to assist in determining the relative position between the first terminal device and the second terminal device, the second request includes identification information of the first terminal device, the identification information of the second terminal device, and the periodicity information, and the measurement result indicates the relative position between the first terminal device and the second terminal device.

According to the third aspect, the first terminal device may send the first request to the first assistance terminal device, to implement periodic ranging/sidelink positioning that is based on the first assistance terminal device. If the first assistance terminal device cannot perform assistive measurement in the next measurement periodicity, the first assistance terminal device may send the second request to the second assistance terminal device, and the first terminal device may not need to actively initiate a discovery procedure for the second assistance terminal device, so that interference to the first terminal device can be reduced. In addition, the periodic ranging/sidelink positioning is performed by using the second assistance terminal device. This avoids interruption of a positioning service caused because the first assistance terminal device cannot continue the assistive measurement, ensures continuity of the positioning service in an assistance terminal device handover scenario, and increases a positioning success rate.

In a possible design, the first request further includes one or more of the following: a measurement result type, a quality of service requirement, and first indication information; and/or the second request further includes one or more of the following: a measurement result type, a quality of service requirement, and first indication information. The measurement result type includes one or more of the following: a distance, a direction, and an angle. The quality of service requirement includes one or more of the following: a precision requirement, a latency requirement, a reliability requirement, and an integrity requirement of the measurement result. The first indication information indicates to perform measurement by using the assistance terminal device.

In a possible design, the first terminal device receives a discovery request from one or more assistance terminal devices. The one or more assistance terminal devices are terminal devices that receive the second request. The first terminal device determines the one or more second assistance terminal devices based on the one or more assistance terminal devices, and sends a discovery response to the one or more second assistance terminal devices. The first terminal device receives the second measurement result from the one or more second assistance terminal devices.

Based on the possible design, in a discovery procedure, the first terminal device may determine the one or more second assistance terminal devices from the one or more assistance terminal devices that receive the second request, and further perform periodic ranging/sidelink positioning by using the second assistance terminal device. This avoids interruption of a positioning service caused because the first assistance terminal device cannot continue the assistive measurement, ensures continuity of the positioning service in an assistance terminal device handover scenario, and increases a positioning success rate.

According to a fourth aspect, an embodiment of this application provides a positioning method. The method may include: A first assistance terminal device receives a first request from a first terminal device, and sends a first measurement result to the first terminal device. The first request is used to request a relative position between the first terminal device and a second terminal device, the first request includes identification information of the second terminal device and periodicity information, the periodicity information indicates a measurement periodicity, and the measurement result indicates the relative position between the first terminal device and the second terminal device. If the first assistance terminal device cannot perform assistive measurement in a next measurement periodicity, the first assistance terminal device sends a second request. The second request is used to request a second assistance terminal device to assist in determining the relative position between the first terminal device and the second terminal device, and the second request includes identification information of the first terminal device, the identification information of the second terminal device, and the periodicity information.

According to the fourth aspect, the first assistance terminal device may implement, based on the first request sent by the first terminal device, periodic ranging/sidelink positioning that is based on the first assistance terminal device. Further, the first assistance terminal device may independently determine whether the first assistance terminal device supports assistive measurement in the next measurement periodicity. If the first assistance terminal device cannot perform assistive measurement in the next measurement periodicity, the first assistance terminal device may search for a new assistance terminal device (for example, the second assistance terminal device), and the first terminal device may not need to actively initiate a discovery procedure for the assistance terminal device, so that interference to the first terminal device can be reduced. In addition, the first assistance terminal device sends the second request to the new assistance terminal device, so that the periodic ranging/sidelink positioning can be performed by using the new assistance terminal device. This avoids interruption of a positioning service caused because the first assistance terminal device cannot continue the assistive measurement, ensures continuity of the positioning service in an assistance terminal device handover scenario, and increases a positioning success rate.

In a possible design, the first request further includes one or more of the following: a measurement result type, a quality of service requirement, and first indication information; and/or the second request further includes one or more of the following: a measurement result type, a quality of service requirement, and first indication information. The measurement result type includes one or more of the following: a distance, a direction, and an angle. The quality of service requirement includes one or more of the following: a precision requirement, a latency requirement, a reliability requirement, and an integrity requirement of the measurement result. The first indication information indicates to perform measurement by using the assistance terminal device.

In a possible design, if a second condition is met, the first assistance terminal device determines that the assistive measurement cannot be performed in the next measurement periodicity. The second condition includes one or more of the following: A distance between the first terminal device and the first assistance terminal device is greater than or equal to a preset distance, a moving speed of the first terminal device relative to the first assistance terminal device is greater than or equal to a preset speed, signal strength of a second signal is less than or equal to preset signal strength, and a difference between a direction of the second signal and a preset direction is greater than or equal to a preset difference. The second signal is a signal received by the first assistance terminal device from the first terminal device.

In a possible design, the first assistance terminal device periodically determines, based on the second condition, whether assistive measurement is supported in the next measurement periodicity.

Based on the foregoing two possible designs, the first assistance terminal device may determine, based on the second condition, whether assistive measurement is supported in the next measurement periodicity, to provide a feasible solution for the first assistance terminal device to determine whether assistive measurement is supported in the next measurement periodicity.

In a possible design, the first assistance terminal device broadcasts the second request. Alternatively, the first assistance terminal device determines the one or more second assistance terminal devices from one or more assistance terminal devices, and sends the second request to the one or more second assistance terminal devices.

Based on the possible design, the first assistance terminal device may send the second request in a broadcast manner, or may first determine the one or more second assistance terminal devices, and then send the second request. A plurality of feasible solutions are provided for the first assistance terminal device to send the second request.

In a possible design, the first assistance terminal device receives a second measurement result from the one or more second assistance terminal devices, and sends the second measurement result to the first terminal device.

Based on the possible design, the first assistance terminal device may send the second measurement result of the second assistance terminal device to the first terminal device, so that the first terminal device does not sense handover of the assistance terminal device.

In a possible design, the first assistance terminal device receives third indication information from the second assistance terminal device. The third indication information indicates that the second assistance terminal device determines to perform assistive measurement based on the second request.

Based on the possible design, the first assistance terminal device may stop, based on the third indication information, performing assistive measurement based on the first request, to reduce power consumption of the first assistance terminal device.

According to a fifth aspect, an embodiment of this application provides a positioning method. The method may include: A second assistance terminal device receives a second request from a first assistance terminal device, and sends a second measurement result to a first terminal device or the first assistance terminal device based on the second request. The second request is used to request the second assistance terminal device to assist in determining a relative position between the first terminal device and a second terminal device, the second request includes identification information of the first terminal device, identification information of the second terminal device, and periodicity information, the periodicity information indicates a measurement periodicity, and the measurement result indicates the relative position between the first terminal device and the second terminal device.

According to the fifth aspect, the second assistance terminal device may perform periodic ranging/sidelink positioning based on the second request sent by the first assistance terminal device. This avoids interruption of a positioning service caused because the first assistance terminal device cannot continue assistive measurement, ensures continuity of the positioning service in an assistance terminal device handover scenario, and increases a positioning success rate.

In a possible design, the second request further includes one or more of the following: a measurement result type, a quality of service requirement, and first indication information. The measurement result type includes one or more of the following: a distance, a direction, and an angle. The quality of service requirement includes one or more of the following: a precision requirement, a latency requirement, a reliability requirement, and an integrity requirement of the measurement result. The first indication information indicates to perform measurement by using the assistance terminal device.

In a possible design, the second assistance terminal device sends a discovery request to the first terminal device, receives a discovery response from the first terminal device, and sends the second measurement result to the first terminal device based on the discovery response of the first terminal device and the second request.

Based on the possible design, the second assistance terminal device may perform a discovery procedure for the first terminal device, and may send the second measurement result to the first terminal device based on the second request when receiving the discovery response.

In a possible design, the second assistance terminal device sends third indication information to the first assistance terminal device. The third indication information indicates that the second assistance terminal device determines to perform assistive measurement based on the second request.

Based on the possible design, the second assistance terminal device sends the third indication information to the first assistance terminal device, so that the first assistance terminal device can stop, based on the third indication information, performing assistive measurement based on the first request, to reduce power consumption of the first assistance terminal device.

According to a sixth aspect, an embodiment of this application provides a communication apparatus. The communication apparatus may be used in the first terminal device in the first aspect or the possible designs of the first aspect, to implement a function performed by the first terminal device. The communication apparatus may be the first terminal device, or may be a chip, a system on chip, or the like of the first terminal device. The communication apparatus may perform, by using hardware, the function performed by the first terminal device, or the function may be implemented by hardware executing corresponding software. The hardware or the software includes one or more modules corresponding to the foregoing function, for example, a transceiver module and a processing module. The transceiver module is configured to send a first request to a first assistance terminal device, and receive a first measurement result from the first assistance terminal device. The first request is used to request a relative position between the first terminal device and a second terminal device, the first request includes identification information of the second terminal device and periodicity information, and the periodicity information indicates a measurement periodicity. The transceiver module is further configured to: if the processing module determines that the first assistance terminal device cannot perform assistive measurement in a next measurement periodicity, send the first request to a second assistance terminal device, and receive a second measurement result from the second assistance terminal device. The measurement result indicates the relative position between the first terminal device and the second terminal device.

In a possible design, the first request further includes one or more of the following: a measurement result type, a quality of service requirement, and first indication information. The measurement result type includes one or more of the following: a distance, a direction, and an angle. The quality of service requirement includes one or more of the following: a precision requirement, a latency requirement, a reliability requirement, and an integrity requirement of the measurement result. The first indication information indicates to perform measurement by using the assistance terminal device.

In a possible design, the transceiver module is further configured to receive second indication information from the first assistance terminal device. The processing module is further configured to determine, based on the second indication information, that the first assistance terminal device cannot perform assistive measurement in the next measurement periodicity. The second indication information indicates that the assistive measurement is terminated.

In a possible design, the processing module is further configured to: if a first condition is met, determine that the first assistance terminal device cannot perform assistive measurement in the next measurement periodicity. The first condition includes one or more of the following: A distance between the first terminal device and the first assistance terminal device is greater than or equal to a preset distance, a moving speed of the first terminal device relative to the first assistance terminal device is greater than or equal to a preset speed, signal strength of a first signal is less than or equal to preset signal strength, and a difference between a direction of the first signal and a preset direction is greater than or equal to a preset difference. The first signal is a signal received by the first terminal device from the first assistance terminal device.

In a possible design, the processing module is further configured to periodically determine, based on the first condition, whether the first assistance terminal device supports assistive measurement in the next measurement periodicity.

It should be noted that the foregoing modules may perform a corresponding function in the method example in the first aspect. For details, refer to detailed descriptions in the method example. For beneficial effects, refer to related descriptions in the first aspect. Details are not described herein again.

According to a seventh aspect, an embodiment of this application provides a communication apparatus. The communication apparatus may be used in the first assistance terminal device in the second aspect or the possible designs of the second aspect, to implement a function performed by the first assistance terminal device. The communication apparatus may be the first assistance terminal device, or may be a chip, a system on chip, or the like of the first assistance terminal device. The communication apparatus may perform, by using hardware, the function performed by the first assistance terminal device, or the function may be implemented by hardware executing corresponding software. The hardware or the software includes one or more modules corresponding to the foregoing function, for example, a transceiver module and a processing module. The transceiver module is configured to receive a first request from a first terminal device, and send a first measurement result to the first terminal device. The first request is used to request a relative position between the first terminal device and a second terminal device, the first request includes identification information of the second terminal device and periodicity information, the periodicity information indicates a measurement periodicity, and the measurement result indicates the relative position between the first terminal device and the second terminal device. The transceiver module is further configured to: if the processing module determines that assistive measurement cannot be performed in a next measurement periodicity, send second indication information to the first terminal device. The second indication information indicates that the assistive measurement is terminated.

In a possible design, the first request further includes one or more of the following: a measurement result type, a quality of service requirement, and first indication information. The measurement result type includes one or more of the following: a distance, a direction, and an angle. The quality of service requirement includes one or more of the following: a precision requirement, a latency requirement, a reliability requirement, and an integrity requirement of the measurement result. The first indication information indicates to perform measurement by using the assistance terminal device.

In a possible design, the processing module is further configured to: if a second condition is met, determine that the assistive measurement cannot be performed in the next measurement periodicity. The second condition includes one or more of the following: A distance between the first terminal device and the first assistance terminal device is greater than or equal to a preset distance, a moving speed of the first terminal device relative to the first assistance terminal device is greater than or equal to a preset speed, signal strength of a second signal is less than or equal to preset signal strength, and a difference between a direction of the second signal and a preset direction is greater than or equal to a preset difference. The second signal is a signal received by the first assistance terminal device from the first terminal device.

In a possible design, the processing module is further configured to periodically determine, based on the second condition, whether assistive measurement is supported in the next measurement periodicity.

It should be noted that the foregoing modules may perform a corresponding function in the method example in the second aspect. For details, refer to detailed descriptions in the method example. For beneficial effects, refer to related descriptions in the second aspect. Details are not described herein again.

According to an eighth aspect, an embodiment of this application provides a communication apparatus. The communication apparatus may be used in the first terminal device in the first aspect or the possible designs of the first aspect, to implement a function performed by the first terminal device. The communication apparatus may be the first terminal device, or may be a chip, a system on chip, or the like of the first terminal device. The communication apparatus may perform, by using hardware, the function performed by the first terminal device, or the function may be implemented by hardware executing corresponding software. The hardware or the software includes one or more modules corresponding to the foregoing function, for example, a transceiver module and a processing module. The transceiver module is configured to send a first request to a first assistance terminal device, and receive a first measurement result from the first assistance terminal device. The first request is used to request a relative position between the first terminal device and a second terminal device, the first request includes identification information of the second terminal device and periodicity information, and the periodicity information indicates a measurement periodicity. The transceiver module is further configured to receive a second measurement result from one or more second assistance terminal devices. The second measurement result is determined by the second assistance terminal device based on a second request sent by the first assistance terminal device, the second request is used to request the second assistance terminal device to assist in determining the relative position between the first terminal device and the second terminal device, the second request includes identification information of the first terminal device, the identification information of the second terminal device, the periodicity information, and the measurement result indicates the relative position between the first terminal device and the second terminal device.

In a possible design, the first request further includes one or more of the following: a measurement result type, a quality of service requirement, and first indication information; and/or the second request further includes one or more of the following: a measurement result type, a quality of service requirement, and first indication information. The measurement result type includes one or more of the following: a distance, a direction, and an angle. The quality of service requirement includes one or more of the following: a precision requirement, a latency requirement, a reliability requirement, and an integrity requirement of the measurement result. The first indication information indicates to perform measurement by using the assistance terminal device.

In a possible design, the transceiver module is further configured to receive a discovery request from one or more assistance terminal devices. The one or more assistance terminal devices are terminal devices that receive the second request. The processing module is further configured to determine the one or more second assistance terminal devices based on the one or more assistance terminal devices. The transceiver module is further configured to send a discovery response to the one or more second assistance terminal devices, and receive the second measurement result from the one or more second assistance terminal devices.

It should be noted that the foregoing modules may perform a corresponding function in the method example in the third aspect. For details, refer to detailed descriptions in the method example. For beneficial effects, refer to related descriptions in the third aspect. Details are not described herein again.

According to a ninth aspect, an embodiment of this application provides a communication apparatus. The communication apparatus may be used in the first assistance terminal device in the fourth aspect or the possible designs of the fourth aspect, to implement a function performed by the first assistance terminal device. The communication apparatus may be the first assistance terminal device, or may be a chip, a system on chip, or the like of the first assistance terminal device. The communication apparatus may perform, by using hardware, the function performed by the first assistance terminal device, or the function may be implemented by hardware executing corresponding software. The hardware or the software includes one or more modules corresponding to the foregoing function, for example, a transceiver module and a processing module. The transceiver module is configured to receive a first request from a first terminal device, and send a first measurement result to the first terminal device. The first request is used to request a relative position between the first terminal device and a second terminal device, the first request includes identification information of the second terminal device and periodicity information, the periodicity information indicates a measurement periodicity, and the measurement result indicates the relative position between the first terminal device and the second terminal device. The transceiver module is further configured to: if the processing module determines that assistive measurement cannot be performed in a next measurement periodicity, send a second request. The second request is used to request a second assistance terminal device to assist in determining the relative position between the first terminal device and the second terminal device, and the second request includes identification information of the first terminal device, the identification information of the second terminal device, and the periodicity information.

In a possible design, the first request further includes one or more of the following: a measurement result type, a quality of service requirement, and first indication information; and/or the second request further includes one or more of the following: a measurement result type, a quality of service requirement, and first indication information. The measurement result type includes one or more of the following: a distance, a direction, and an angle. The quality of service requirement includes one or more of the following: a precision requirement, a latency requirement, a reliability requirement, and an integrity requirement of the measurement result. The first indication information indicates to perform measurement by using the assistance terminal device.

In a possible design, the processing module is further configured to: if a second condition is met, determine that the assistive measurement cannot be performed in the next measurement periodicity. The second condition includes one or more of the following: A distance between the first terminal device and the first assistance terminal device is greater than or equal to a preset distance, a moving speed of the first terminal device relative to the first assistance terminal device is greater than or equal to a preset speed, signal strength of a second signal is less than or equal to preset signal strength, and a difference between a direction of the second signal and a preset direction is greater than or equal to a preset difference. The second signal is a signal received by the first assistance terminal device from the first terminal device.

In a possible design, the processing module is further configured to periodically determine, based on the second condition, whether assistive measurement is supported in the next measurement periodicity.

In a possible design, the transceiver module is further configured to broadcast the second request. Alternatively, the processing module is further configured to determine the one or more second assistance terminal devices from one or more assistance terminal devices, and the transceiver module is further configured to send the second request to the one or more second assistance terminal devices.

In a possible design, the transceiver module is further configured to receive a second measurement result from the one or more second assistance terminal devices, and send the second measurement result to the first terminal device.

In a possible design, the transceiver module is further configured to receive third indication information from the second assistance terminal device. The third indication information indicates that the second assistance terminal device determines to perform assistive measurement based on the second request.

It should be noted that the foregoing modules may perform a corresponding function in the method example in the fourth aspect. For details, refer to detailed descriptions in the method example. For beneficial effects, refer to related descriptions in the fourth aspect. Details are not described herein again.

According to a tenth aspect, an embodiment of this application provides a communication apparatus. The communication apparatus may be used in the first assistance terminal device in the fifth aspect or the possible designs of the fifth aspect, to implement a function performed by the second assistance terminal device. The communication apparatus may be the second assistance terminal device, or may be a chip, a system on chip, or the like of the second assistance terminal device. The communication apparatus may perform, by using hardware, the function performed by the second assistance terminal device, or the function may be implemented by hardware executing corresponding software. The hardware or the software includes one or more modules corresponding to the foregoing function, for example, a transceiver module and a processing module. The transceiver module is configured to receive a second request from a first assistance terminal device, and send a second measurement result to a first terminal device or the first assistance terminal device based on the second request. The second request is used to request the second assistance terminal device to assist in determining a relative position between the first terminal device and a second terminal device, the second request includes identification information of the first terminal device, identification information of the second terminal device, and periodicity information, the periodicity information indicates a measurement periodicity, and the measurement result indicates the relative position between the first terminal device and the second terminal device.

In a possible design, the second request further includes one or more of the following: a measurement result type, a quality of service requirement, and first indication information. The measurement result type includes one or more of the following: a distance, a direction, and an angle. The quality of service requirement includes one or more of the following: a precision requirement, a latency requirement, a reliability requirement, and an integrity requirement of the measurement result. The first indication information indicates to perform measurement by using the assistance terminal device.

In a possible design, the transceiver module is further configured to send a discovery request to the first terminal device, and receive a discovery response from the first terminal device. The transceiver module is further configured to send the second measurement result to the first terminal device based on the discovery response of the first terminal device and the second request.

In a possible design, the transceiver module is further configured to send third indication information to the first assistance terminal device. The third indication information indicates that the second assistance terminal device determines to perform assistive measurement based on the second request.

It should be noted that the foregoing modules may perform a corresponding function in the method example in the fifth aspect. For details, refer to detailed descriptions in the method example. For beneficial effects, refer to related descriptions in the fifth aspect. Details are not described herein again.

According to an eleventh aspect, an embodiment of this application provides a communication apparatus. The communication apparatus includes one or more processors. The one or more processors are configured to run a computer program or instructions. When the one or more processors execute the computer instructions or the instructions, the communication apparatus is enabled to perform the positioning method according to any one of the first aspect to the fifth aspect.

In a possible design, the communication apparatus further includes one or more memories, the one or more memories are coupled to the one or more processors, and the one or more memories are configured to store the computer program or the instructions. In a possible implementation, the memory is located outside the communication apparatus. In another possible implementation, the memory is located inside the communication apparatus. In this embodiment of this application, the processor and the memory may alternatively be integrated into one component. In other words, the processor and the memory may alternatively be integrated together. In a possible implementation, the communication apparatus further includes a transceiver, and the transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a twelfth aspect, an embodiment of this application provides a communication apparatus. The communication apparatus includes an input/output interface and a logic circuit, the input/output interface is configured to input information and/or output information, and the logic circuit is configured to perform the positioning method according to any one of the first aspect to the fifth aspect, to perform processing based on the information and/or generate the information.

According to a thirteenth aspect, an embodiment of this application provides a computer-readable storage medium. The computer-readable storage medium stores computer instructions or a program, and when the computer instructions or the program is run on a computer, the positioning method according to any one of the first aspect to the fifth aspect is performed.

According to a fourteenth aspect, an embodiment of this application provides a computer program product including computer instructions. When the computer program product runs on a computer, the positioning method according to any one of the first aspect to the fifth aspect is performed.

According to a fifteenth aspect, an embodiment of this application provides a computer program. When the computer program is run on a computer, the positioning method according to any one of the first aspect to the fifth aspect is performed.

For technical effects brought by any design manner of the eleventh aspect to the fifteenth aspect, refer to the technical effects brought by any one of the first aspect to the fifth aspect.

According to a sixteenth aspect, a communication system is provided. The communication system may include the first terminal device according to the sixth aspect and the first assistance terminal device according to the seventh aspect, or include the first terminal device according to the eighth aspect, the first assistance terminal device according to the ninth aspect, and the second assistance terminal device according to the tenth aspect.

**BRIEF DESCRIPTION OF DRAWINGS**

FIG. 1 is a diagram of energy attenuation of a radio signal according to an embodiment of this application;

FIG. 2 is a diagram of a ranging method based on received signal strength according to an embodiment of this application;

FIG. 3 is a diagram of a single-sided two-way ranging method according to an embodiment of this application;

FIG. 4 is a diagram of a double-sided two-way ranging method according to an embodiment of this application;

FIG. 5 is a diagram of a ranging/sidelink positioning method based on an assistance terminal device according to an embodiment of this application;

FIG. 6 is a flowchart of a ranging/sidelink positioning method based on an assistance terminal device according to an embodiment of this application;

FIG. 7 is a flowchart of a periodic ranging/sidelink positioning method according to an embodiment of this application;

FIG. 8 is a diagram of a communication system according to an embodiment of this application;

FIG. 9 is a diagram of composition of a communication apparatus according to an embodiment of this application;

FIG. 10 is a flowchart of a positioning method according to an embodiment of this application;

FIG. 11 is a flowchart of a positioning method according to an embodiment of this application;

FIG. 12 is a flowchart of a positioning method according to an embodiment of this application;

FIG. 13 is a diagram of composition of a terminal device according to an embodiment of this application; and

FIG. 14 is a diagram of composition of a communication apparatus according to an embodiment of this application.

DESCRIPTION OF EMBODIMENTS

Before embodiments of this application are described, technical terms used in embodiments of this application are described.

Ranging (ranging): The ranging means determining, through a PC5 interface, a distance between two or more terminal devices and/or a direction and/or relative positioning between one terminal device (for example, a target terminal device) and another terminal device (for example, a reference terminal device).

Sidelink (sidelink) positioning: The sidelink positioning may be referred to as sidelink positioning for short. To be specific, the sidelink positioning is positioning performed through a sidelink (or described as a link for direct communication) between terminal devices.

The PC5 interface may be a communication interface between terminal devices, or may be described as a short-distance direct communication interface between the terminal devices. The reference terminal device may be a terminal device that determines a reference plane and a reference direction in a ranging-based service and sidelink positioning. The target terminal device may be a terminal device that measures a distance, a direction, and/or a position relative to the reference plane, the reference direction, and/or a position of the reference terminal device.

In a three dimensional (3 dimensions, 3D) case, the direction may include a horizontal direction and an elevation direction.

In the ranging-based service and the sidelink positioning, distance measurement may be performed, direction measurement may be performed, or both direction measurement and distance measurement may be performed. This is not limited.

It should be noted that the distance, the direction, and the relative positioning may also be collectively referred to as a relative position, or may be referred to as a ranging/sidelink positioning result. This is not limited.

Ranging/sidelink positioning method: The ranging/sidelink positioning method may include a ranging method based on received signal strength, a ranging method based on time of flight, a ranging/sidelink positioning method based on an assistance terminal device, and the like. This is not limited.

I. Ranging method based on received signal strength

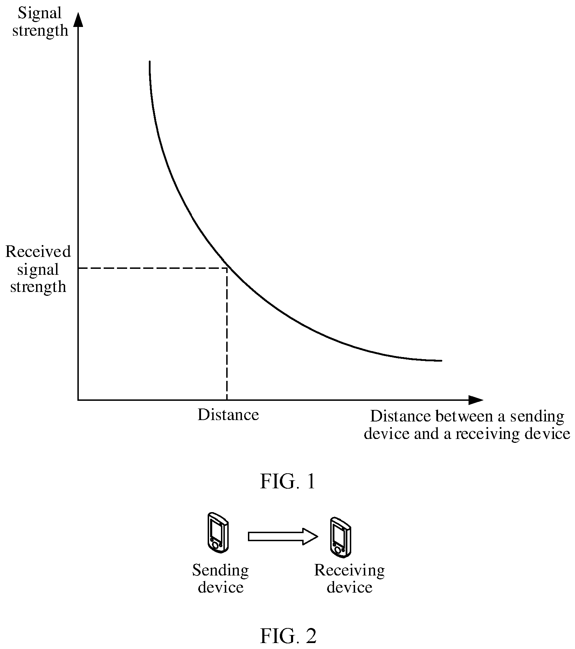

As shown in FIG. 1, energy of a radio signal (or referred to as a radio wave) attenuates with a distance. If transmit signal strength is known, a receiving device may measure received signal strength, and a distance between a sending device and the receiving device is further estimated based on the transmit signal strength and the received signal strength.

The received signal strength (received signal strength, RSS) is affected by four elements: a transmit power, path attenuation, a receive gain, and a system processing gain.

For example, as shown in FIG. 2, the distance between the receiving device and the sending device is measured. Refer to the following formula (1). A distance d between the sending device and a beacon node is determined based on a reference distance $d_0$ between the receiving device and the beacon node, a signal propagation loss $p(d_0)$ at the sending device, a signal propagation loss *p(d)* at the receiving device, a path loss factor *n,* and a blocking factor *X,* and the distance between the receiving device and the sending device is further determined.

The formula (1) may be:

$$p(d) = p(d_0) + 10nlog_{10}\left(\frac{d}{d_0}\right) + X$$

.

It should be noted that, in an ideal propagation environment, attenuation of the radio signal is directly proportional to $1/r^2$ (r is a propagation distance). However, energy attenuation of the radio signal during propagation in space is actually affected by a plurality of factors, for example, an environmental factor. Ranging precision is affected by many factors, such as an obstacle, the weather, and a non-range signal. In general, the ranging method based on received signal strength is applicable to a scenario with an open test environment and small environment interference. Installment in a shaft or a complex electromagnetic environment is avoided. Only in this way can communication quality be improved and an unpredictable interference phenomenon such as background noise be reduced. In other words, in an actual environment, the ranging method based on received signal strength is mainly applied to short-distance ranging and indoor positioning.

II. Ranging method based on time of flight

The time of flight (time of flight, TOF) may be propagation time of a signal in a medium. When a propagation speed of the signal in the medium is known, a distance traveled by the signal may be estimated by using the time of flight.

For example, the ranging method based on time of flight may include a ranging method based on time synchronization, a ranging method based on device reflection, a two-way ranging method, and the like. This is not limited.

1. Ranging method based on time synchronization

It is assumed that *d* represents a distance between a sending device and a receiving device, c represents a propagation speed of a signal (for example, a speed of sound), and t represents measured time of flight. In this case, *d=c\*t* may be obtained.

In this method, sending time and time of arrival of the signal need to be accurately learned of, in other words, strict time synchronization needs to be performed between the sending device and the receiving device.

2. Ranging method based on device reflection

If ranging is performed based on time of arrival (time of arrival, TOA) of a signal, time synchronization between a sending device and a receiving device may be difficult. Therefore, it is proposed that the receiving device and the sending device be a same device, so that the time synchronization between the sending device and the receiving device can be avoided during calculation of the time of flight. A common practice is to use a ranging object as a reflector to directly reflect a transmitted signal. In this method, the reflector is required to have a specific volume, and a transceiver can work in a full-duplex mode. To be specific, in addition to sending a signal, the transceiver can also receive a signal reflected by a target object (namely, the reflector).

3. Two-way ranging method

In the two-way ranging method, two devices are respectively used as a sending device and a receiving device. It is assumed that the sending device sends a signal at a first moment, and after the receiving device receives the signal, the receiving device returns a same wave after waiting for Δ*t*. The sending device records a second moment at which a reply is received. In this way, a distance between the sending device and the receiving device is obtained based on propagation duration (namely, time of flight) and a propagation speed.

Optionally, the two-way ranging method may include a single-sided two-way ranging method and a double-sided two-way ranging method.

In the single-sided two-way ranging method, single-sided round-trip communication is performed. Time of single flight of the signal between the sending device and the receiving device may be determined based on round-trip communication duration of the signal between the sending device and the receiving device, and the distance between the sending device and the receiving device is further determined based on the propagation speed of the signal.

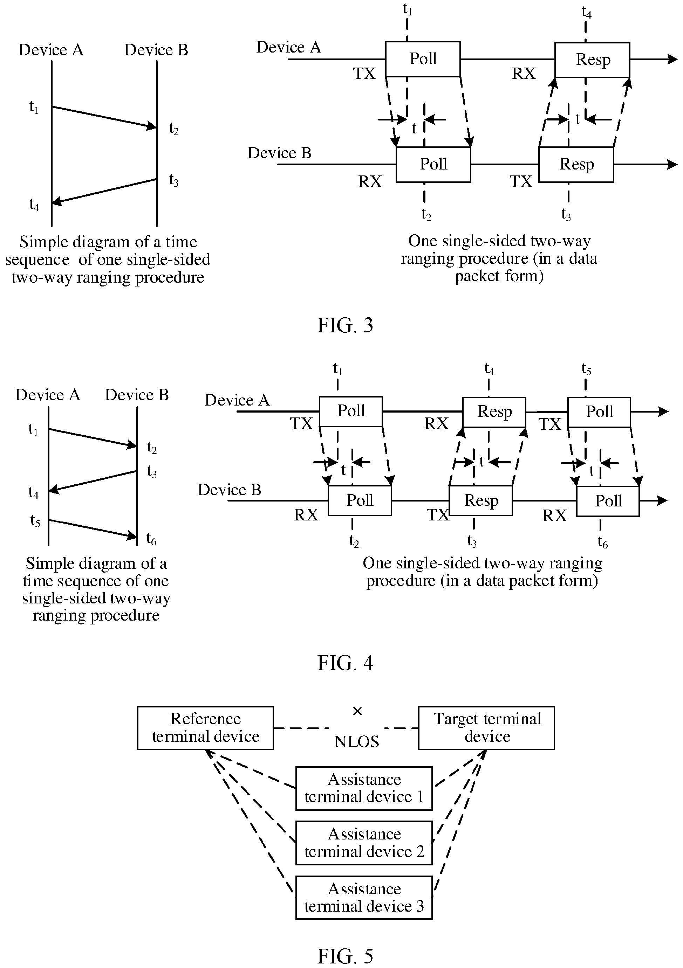

For example, as shown in FIG. 3, a distance between a device A and a device B is measured. It is assumed that the device A sends a poll (poll) data packet to the device B at a moment $t_1$, and the device B may receive the poll data packet at a moment $t_2$; and the device B may send a response (response) data packet to the device A at a moment $t_3$, and the device A may receive the response data packet at a moment $t_4$.

In this case, time of single flight of the signal between the device A and the device B may be

$$t = \frac{(t_4 - t_1) - (t_3 - t_2)}{2}$$

, and the distance between the sending device and the receiving device may be further determined based on the propagation speed of the signal.

In the double-sided two-way ranging method, one additional data transmission is added on the basis of the single-sided two-way ranging method. Time of single flight of the signal between the sending device and the receiving device may be determined based on round-trip communication duration of the signal between the sending device and the receiving device, and the distance between the sending device and the receiving device is further determined based on the propagation speed of the signal.

For example, as shown in FIG. 4, a distance between a device A and a device B is measured. It is assumed that the device A sends a poll (poll) data packet to the device B at a moment $t_1$, and the device B may receive the poll data packet at a moment $t_2$; and the device B may send a response (response) data packet to the device A at a moment $t_3$, and the device A may receive the response data packet at a moment $t_4$. In a current process, one single-sided two-way ranging procedure is completed. Further, the device A may send a final data packet to the device B at a moment $t_5$, and the device B may receive the final data packet at a moment $t_6$. In this case, a double-sided two-way ranging procedure ends.

In this case, time of single flight of the signal between the device A and the device B may be

$$t = \frac{((t_4 - t_1) - (t_3 - t_2)) + ((t_6 - t_3) - (t_5 - t_4))}{2}$$

, and the distance between the sending device and the receiving device may be further determined based on the propagation speed of the signal.

III. Ranging/sidelink positioning method based on an assistance terminal device

For positioning measurement between a target terminal device and a reference terminal device, if direct ranging/sidelink positioning between the target terminal device and the reference terminal device cannot be implemented (for example, there is no line of sight (line of sight, LOS) path between the target terminal device and the reference terminal device), or precision of a measurement result cannot meet a requirement, the measurement result between the target terminal device and the reference terminal device may be obtained with assistance of one or more terminal devices (for example, assistance terminal devices).

As shown in FIG. 5, the assistance terminal device may separately implement direct ranging/sidelink positioning with the target terminal device and the reference terminal device. Further, the target terminal device, the assistance terminal device, or the reference terminal device may determine a ranging/sidelink positioning result between the target terminal device and the reference terminal device based on a measurement result between the assistance terminal device and the target terminal device and a measurement result between the assistance terminal device and the reference terminal device.

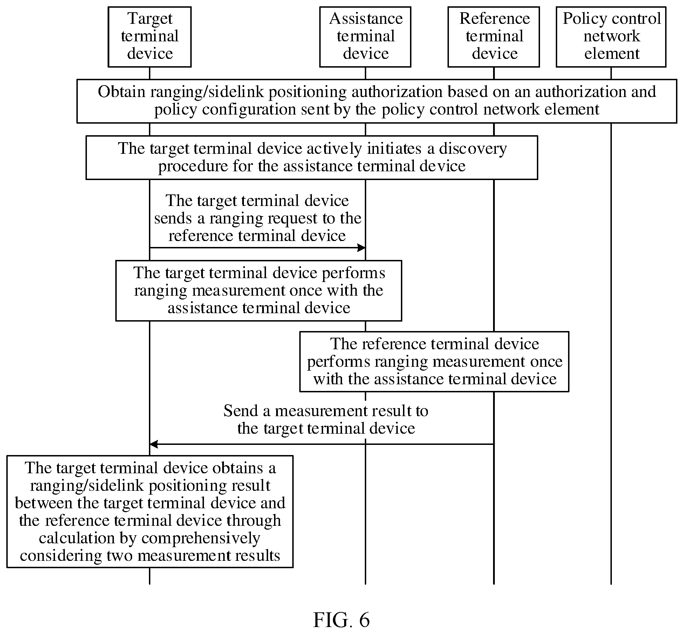

For example, as shown in FIG. 6, the target terminal device, the reference terminal device, and the assistance terminal device may separately obtain ranging/sidelink positioning authorization in an initialization phase based on an authorization and policy configuration sent by a policy control network element. When the target terminal device receives a ranging request between the target terminal device and the reference terminal device and determines that the direct ranging/sidelink positioning cannot be implemented, the target terminal device may actively initiate a discovery procedure for the assistance terminal device, and may establish a connection to the assistance terminal device after determining the assistance terminal device. The target terminal device may send a ranging request to the reference terminal device, and perform ranging measurement once with the assistance terminal device, to obtain a measurement result. After receiving the ranging request of the target terminal device, the reference terminal device may also perform ranging measurement once with the corresponding assistance terminal device, to obtain a measurement result, and send the measurement result to the target terminal device. The target terminal device may obtain a ranging/sidelink positioning result between the target terminal device and the reference terminal device through calculation by comprehensively considering the two measurement results.

However, in the foregoing method, only one-time ranging/sidelink positioning based on the assistance terminal device can be implemented, and periodic ranging/sidelink positioning between the target terminal device and the reference terminal device cannot be supported.

Based on this, it is proposed that for a periodic ranging/sidelink positioning process in which an assistance terminal device participates, each time a periodic moment arrives, the assistance terminal device may separately perform ranging/sidelink positioning once on a target terminal device and a reference terminal device, and return two measurement results to the target terminal device. The target terminal device determines a ranging/sidelink positioning result between the target terminal device and the reference terminal device based on the two measurement results. Alternatively, the assistance terminal device may determine a ranging/sidelink positioning result between the target terminal device and the reference terminal device based on the two measurement results, and send the ranging/sidelink positioning result to the target terminal device.

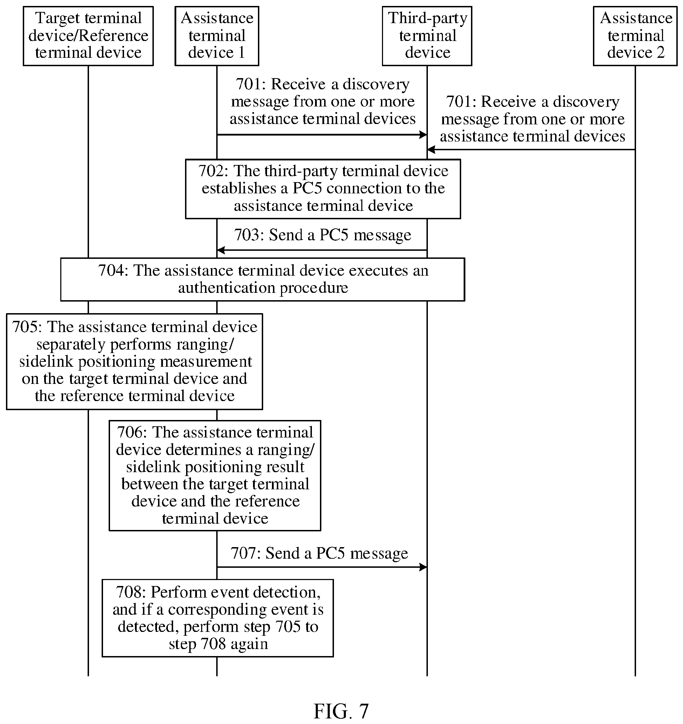

For example, as shown in FIG. 7, an example in which a third-party terminal device requests the ranging/sidelink positioning result between the target terminal device and the reference terminal device is used to describe the process of performing periodic ranging/sidelink positioning based on the assistance terminal device.

FIG. 7 is a flowchart of a periodic ranging/sidelink positioning method according to an embodiment of this application. As shown in FIG. 7, the method may include the following steps.

Step 701: A third-party terminal device receives a discovery message from one or more assistance terminal devices.

The third-party terminal device may be a target terminal device, may be a reference terminal device, or may be any terminal device other than the target terminal device and the reference terminal device. This is not limited.

The discovery message may include information about the assistance terminal device, ranging service code, and ranging exposure information.

Step 702: The third-party terminal device establishes a PC5 connection to the assistance terminal device.

The third-party terminal device may select one assistance terminal device from the one or more assistance terminal devices, and establish a PC5 connection to the assistance terminal device.

Step 703: The third-party terminal device sends a PC5 message to the assistance terminal device.

The PC5 message may include information about the third-party terminal device, the information about the assistance terminal device, and a ranging service request.

The ranging service request may be used to request to measure a ranging/sidelink positioning result between the target terminal device and the reference terminal device.

Optionally, the ranging service request may include identification information of the target terminal device and identification information of the reference terminal device.

Step 704: The assistance terminal device executes an authentication procedure.

The assistance terminal device may determine, based on the PC5 message sent by the third-party terminal device, whether the third-party terminal device is authorized to obtain the ranging/sidelink positioning result between the target terminal device and the reference terminal device. If the assistance terminal device determines that the third-party terminal device is authorized, the assistance terminal device determines that ranging/sidelink positioning measurement can be performed.

For example, the assistance terminal device may query registration authorization information of the third-party terminal device from a network to determine whether the third-party terminal device is authorized.

Alternatively, the assistance terminal device may determine, based on the PC5 message sent by the third-party terminal device, whether the assistance terminal device can support the ranging/sidelink positioning measurement on the target terminal device and the reference terminal device. If the assistance terminal device supports the ranging/sidelink positioning measurement, the ranging/sidelink positioning measurement can be performed.

For example, the assistance terminal device may separately establish a PC5 connection to the target terminal device and the reference terminal device, and separately send a ranging/sidelink positioning request to the target terminal device and the reference terminal device. The target terminal device and the reference terminal device determine, based on presence of an LOS path, signal strength, and the like, whether the positioning measurement can be performed with the assistance terminal device. If the positioning measurement can be performed with the assistance terminal device, the target terminal device and the reference terminal device separately return a response message to the assistance terminal device. The assistance terminal device may determine, based on the response message, that the assistance terminal device supports the ranging/sidelink positioning measurement on the target terminal device and the reference terminal device.

Step 705: The assistance terminal device separately performs ranging/sidelink positioning measurement on the target terminal device and the reference terminal device.

The assistance terminal device may perform ranging/sidelink positioning measurement on the target terminal device, to obtain a ranging/sidelink positioning result between the assistance terminal device and the target terminal device. The assistance terminal device may also perform ranging/sidelink positioning measurement on the reference terminal device, to obtain a ranging/sidelink positioning result between the assistance terminal device and the reference terminal device.

Step 706: The assistance terminal device determines the ranging/sidelink positioning result between the target terminal device and the reference terminal device.

The assistance terminal device may determine the ranging/sidelink positioning result between the target terminal device and the reference terminal device through calculation based on the ranging/sidelink positioning result between the assistance terminal device and the target terminal device and the ranging/sidelink positioning result between the assistance terminal device and the reference terminal device.

Step 707: The assistance terminal device sends a PC5 message to the third-party terminal device.

The PC5 message may include the information about the third-party terminal device, the information about the assistance terminal device, and a ranging service response.

The ranging service response may include the ranging/sidelink positioning result between the target terminal device and the reference terminal device.

Step 708: The assistance terminal device performs event detection, and if a corresponding event is detected, step 705 to step 708 are performed again, to periodically perform ranging/sidelink positioning measurement on the target terminal device and the reference terminal device.

The event detected by the assistance terminal device may include one or more of the following: Periodic timing expires, the target terminal device enters, leaves, or remains in a specific area, a straight-line distance of the target terminal device from a reference point exceeds a predetermined value, and the like.

According to the method shown in FIG. 7, periodic ranging/sidelink positioning based on the assistance terminal device can be implemented. However, currently, the method supports only that the same assistance terminal device always performs assisted ranging/-sidelink positioning. When a distance between the terminal device and the assistance terminal device increases, the assistance terminal device may fail to continue assistive measurement. Consequently, a positioning service may be discontinuous, resulting in a positioning failure.

For example, it is assumed that the target terminal device and the reference terminal device are two driving vehicles on a highway, and the current assistance terminal device is a sign pole located on a side of the highway. Because the target terminal device and the reference terminal device continuously move, distances between the assistance terminal device and the target terminal device and between the assistance terminal device and the reference terminal device continuously increase, assistive measurement in a next periodicity may fail to be continued. Consequently, the positioning service may be discontinuous, resulting in the positioning failure.

To resolve the foregoing technical problem, embodiments of this application provide a positioning method. In the method, a first terminal device sends a first request to a first assistance terminal device, and receives a first measurement result from the first assistance terminal device. The first request is used to request a relative position between the first terminal device and a second terminal device, and the first request includes identification information of the second terminal device and periodicity information indicating a measurement periodicity. If the first terminal device determines that the first assistance terminal device cannot perform assistive measurement in a next measurement periodicity, the first terminal device may send the first request to a second assistance terminal device, and receive a second measurement result from the second assistance terminal device. The measurement result indicates the relative position between the first terminal device and the second terminal device.

In embodiments of this application, the first terminal device may send the first request to the first assistance terminal device, to implement periodic ranging/sidelink positioning that is based on the first assistance terminal device. If the first terminal device determines that the first assistance terminal device cannot perform assistive measurement in the next periodicity, the first terminal device may send the first request to the second assistance terminal device, to perform periodic ranging/sidelink positioning by using the second assistance terminal device. This avoids interruption of a positioning service caused because the first assistance terminal device cannot continue the assistive measurement, ensures continuity of the positioning service in an assistance terminal device handover scenario, and increases a positioning success rate.

The following describes implementations of embodiments of this application in detail with reference to the accompanying drawings in this specification.

The positioning method provided in embodiments of this application may be applied to any communication system. The communication system may be a third generation partnership project (third generation partnership project, 3GPP) communication system, for example, a long term evolution (long term evolution, LTE) system, a fifth generation (fifth generation, 5G) mobile communication system, a new radio (new radio, NR) communication system, or a vehicle to everything (vehicle to everything, V2X) system; or may be a system in which LTE and 5G hybrid networking is used, a non-terrestrial communication network (non-terrestrial network, NTN) system, a device-to-device (device-to-device, D2D) communication system, a machine to machine (machine to machine, M2M) communication system, internet of things (internet of things, IoT), a universal mobile telecommunications system (universal mobile telecommunications system, UMTS), a code division multiple access (code division multiple access, CDMA) system, or another next generation communication system, for example, a future communication system such as 6G. Alternatively, the communication system may be a non-3GPP communication system. This is not limited.

The communication system applicable to this application is merely an example for description, and a communication system applicable to this application is not limited thereto. This is uniformly described herein, and details are not described below again.

The positioning method provided in embodiments of this application may be applied to various vertical fields, such as consumption, a smart household, a smart city, smart transportation, smart retail, and industry 4.0. Some typical application scenarios are as follows.

(1) Home television control: A smart television may export, based on a distance between a terminal device and a television reference point, a direction from the television reference point to the terminal device, and a direction from the terminal device to the television reference point, a television screen area to which the terminal device points, so that the smart television can determine where a cursor is placed and what content a user selects.

(2) Remote access authorization: A person may remotely monitor, by using a terminal device 1 (for example, a mobile phone 1) of the person, a distance between a visitor holding a terminal device 2 (for example, a mobile phone 2) and a door on which ranging can be performed, to determine when to unlock the door and allow the visitor to enter.

(3) Museum guide: In a museum, when a person points to a painting using a mobile phone, a museum tour server may detect this, and then the museum tour server transmits an introduction of the painting to the mobile phone. The museum tour server detects an event by monitoring a distance and direction from a mobile phone of a visitor to a painting.

(4) Object and device tracking based on energy-saving ranging: Relative position information and/or a direction are/is exported through ranging measurement, so that an object and a device (including a coin-cell powered device) can be easily found and tracked when the object and the device are out of coverage or within partial coverage. For example, this is excessively useful for tracking a victim or a first responder in an emergency. Ranging information is further linked to a known position of the device (for example, a user equipment or an uncrewed aerial vehicle positioned by using an enhanced location service (enhanced location service, eLCS) or through secure user plane location (secure user plane location, SUPL) within network coverage), so that excessively accurate position estimation can be achieved, and finding a corresponding object or device becomes easier.

(5) Immersive sound based on ranging of a plurality of terminal devices: Speakers A, B, and C coordinate to provide an immersive experience for a person D who is listening to music. To achieve this objective, the speakers A, B, and C need to learn of ranges of each other and ranges from the speakers to the person D. When there is a Non-LOS path between the speaker A and the speaker B, the speaker A and the speaker B may export a range based on results of ranges from the speaker A and the speaker B to the speaker C.

(6) Autonomous cooperative driving for short-distance grouping: Cooperative short-distance grouping is a scenario in which a distance between vehicles such as trucks is excessively short, and creates an ideal legal trailing form. A group of vehicles travel with a leading vehicle. The leading vehicle is normally driven by a well-trained driver with expertise, and several following vehicles are fully autonomously driven by a system. The leading vehicle exchanges information with the other vehicles, and a distance (vertical gap) between adjacent vehicles is allowed to be short. The automotive industry needs this approach, because reduction in aerodynamic resistance leads to higher fuel economy and less greenhouse gas emission.

It should be noted that a 3GPP standard specifies a function and a performance requirement of a ranging-based service, and specifies that the ranging-based positioning and service may support 5G coverage or not support 5G coverage, in other words, support a 5G coverage scenario, a partial 5G coverage scenario, an out of 5G coverage scenario, and other scenarios. Both a licensed spectrum and an unlicensed spectrum may be used for ranging.

Requirements on relative positioning supporting a V2X service (for example, vehicle platooning) are also specified: (a) A 3GPP system should support relative horizontal position precision of 0.1 m between UEs that support a V2X application. (b) The 3GPP system should support relative vertical position precision of less than 0.5 m for terminal devices that support the V2X application. In addition, the standard further specifies use cases and service requirements for sidelink positioning between the terminal device supporting V2X and a public safety service, and use cases for being within coverage, within partial coverage, and out of coverage. In addition, the 5G automotive association (5G automotive association, 5GAA) further determines high-precision sidelink positioning as one of main areas of interest to support advanced use cases, such as vulnerable road user (vulnerable road user, VRU) protection, autonomous driving, remote driving, and dynamic intersection management. The ranging-based service enhances a 5GC architecture and enables application of the 5GC architecture in a commercial service, the V2X service, and the public safety service.

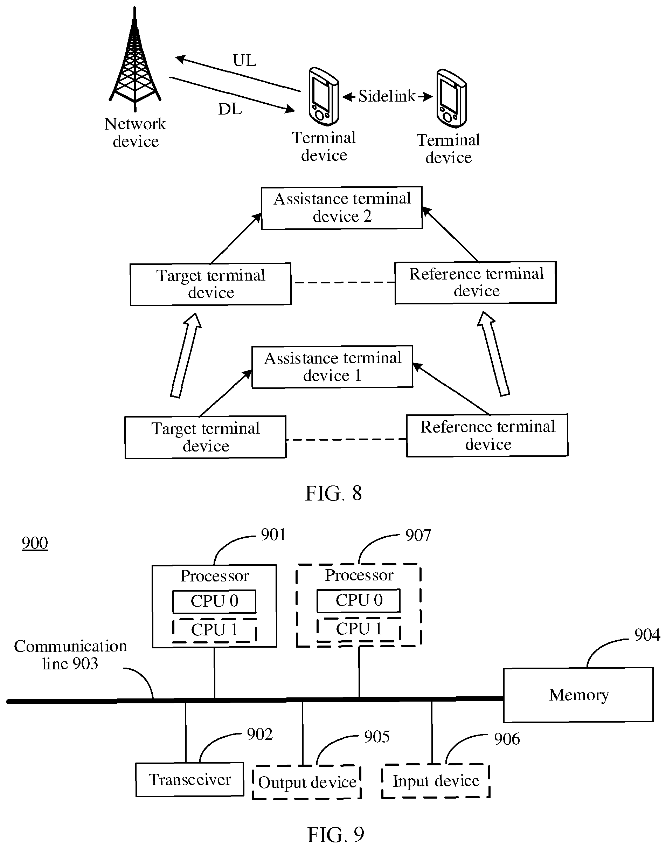

The following uses FIG. 8 as an example to describe the communication system provided in embodiments of this application.

FIG. 8 is a diagram of a communication system according to an embodiment of this application. As shown in FIG. 8, the communication system may include one or more terminal devices.

The terminal device in FIG. 8 may include one or more target terminal devices, one or more reference terminal devices, and one or more assistance terminal devices.

The terminal device may perform air interface communication with a network device through an uplink (uplink, UL) or a downlink (downlink, DL). The terminal devices may communicate with each other through a sidelink.

Optionally, the terminal device in FIG. 8 may be a device having a wireless transceiver function, or a chip or a chip system that can be disposed in the device, and may be configured to provide voice and/or data connectivity for a user. The terminal device may also be referred to as a user equipment (user equipment, UE), a terminal (terminal), a mobile station (mobile station, MS), a mobile terminal (mobile terminal, MT), or the like. For example, the terminal device in FIG. 8 may be a handheld device, a vehicle-mounted device having a wireless connection function, or the like, for example, a mobile phone (mobile phone), a tablet computer, a notebook computer, a palmtop computer, or a computer having a wireless transceiver function. Alternatively, the terminal device may be a mobile internet device (mobile internet device, MID), a wearable device, a virtual reality (virtual reality, VR) terminal, an augmented reality (augmented reality, AR) terminal, a wireless terminal in industrial control (industrial control), a wireless terminal in self driving (self driving), a wireless terminal in remote surgery (remote medical surgery), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle with a vehicle-to-vehicle (vehicle-to-vehicle, V2V) communication capability, an intelligent connected vehicle, an uncrewed aerial vehicle with an uncrewed aerial vehicle to uncrewed aerial vehicle (UAV to UAV, U2U) communication capability, or the like. This is not limited.

Optionally, the communication system further includes a policy control network element. The policy control network element is configured to authorize a capability such as ranging/assisted ranging to the terminal device in an initialization phase of the terminal device.

For example, the policy control network element may be a policy control function (policy control function, PCF).

It should be noted that the terminal device and the policy control network element in this embodiment of this application each may be one or more chips, or may be a system on chip (system on chip, SoC), or the like. FIG. 8 is merely an example accompany drawing, and a quantity of devices included in FIG. 8 is not limited. In addition, in addition to the devices shown in FIG. 8, the communication system may further include another device. Names of the devices and the links in FIG. 8 are not limited. In addition to the names shown in FIG. 8, the devices and the links may alternatively have other names. This is not limited.

During specific implementation, for example, as shown in FIG. 8, each terminal device or the policy control network element may use a composition structure shown in FIG. 9, or include components shown in FIG. 9. FIG. 9 is a diagram of composition of a communication apparatus 900 according to an embodiment of this application. The communication apparatus 900 may be a terminal device, or a chip or a system on chip in the terminal device; or may be a network device, or a chip or a system on chip in the network device. As shown in FIG. 9, the communication apparatus 900 includes a processor 901, a transceiver 902, and a communication line 903.

Further, the communication apparatus 900 may further include a memory 904. The processor 901, the memory 904, and the transceiver 902 may be connected through the communication line 903.

The processor 901 is a central processing unit (central processing unit, CPU), a general-purpose processor (network processor, NP), a digital signal processor (digital signal processor, DSP), a microprocessor, a microcontroller, a programmable logic device (programmable logic device, PLD), or any combination thereof. Alternatively, the processor 901 may be another apparatus having a processing function, for example, a circuit, a component, or a software module. This is not limited.

The transceiver 902 is configured to communicate with another device or another communication network. The another communication network may be an Ethernet, a radio access network (radio access network, RAN), a wireless local area network (wireless local area network, WLAN), or the like. The transceiver 902 may be a module, a circuit, a transceiver, or any apparatus that can implement communication.

The communication line 903 is configured to transmit information between components included in the communication apparatus 900.

The memory 904 is configured to store instructions, where the instructions may be a computer program.

The memory 904 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 904 may exist independently of the processor 901, or may be integrated with the processor 901. The memory 904 may be configured to store instructions, program code, some data, or the like. The memory 904 may be located inside the communication apparatus 900, or may be located outside the communication apparatus 900. This is not limited. The processor 901 is configured to execute the instructions stored in the memory 904, to implement positioning methods provided in the following embodiments of this application.

In an example, the processor 901 may include one or more CPUs, for example, a CPU 0 and a CPU 1 in FIG. 9.

In an optional implementation, the communication apparatus 900 includes a plurality of processors. For example, in addition to the processor 901 in FIG. 9, the communication apparatus 900 may further include a processor 907.

In an optional implementation, the communication apparatus 900 further includes an output device 905 and an input device 906. For example, the input device 906 is a device such as a keyboard, a mouse, a microphone, or a joystick, and the output device 905 is a device such as a display or a speaker (speaker).

It should be noted that the communication apparatus 900 may be a desktop computer, a portable computer, a network server, a mobile phone, a tablet computer, a wireless terminal, an embedded device, a chip system, or a device having a similar structure in FIG. 9. **In** addition, the composition structure shown in FIG. 9 does not constitute a limitation on the communication apparatus. **In** addition to the components shown in FIG.

9, the communication apparatus may include more or fewer components than those shown in the figure, or combine some components, or have different component arrangements.

**In** embodiments of this application, the chip system may be formed by a chip, or may include the chip and another discrete component.

**In** addition, actions, terms, and the like in embodiments of this application may be mutually referenced. This is not limited. **In** embodiments of this application, names of messages exchanged between devices, names of parameters in the messages, or the like are merely examples. Other names may alternatively be used during specific implementation. This is not limited.

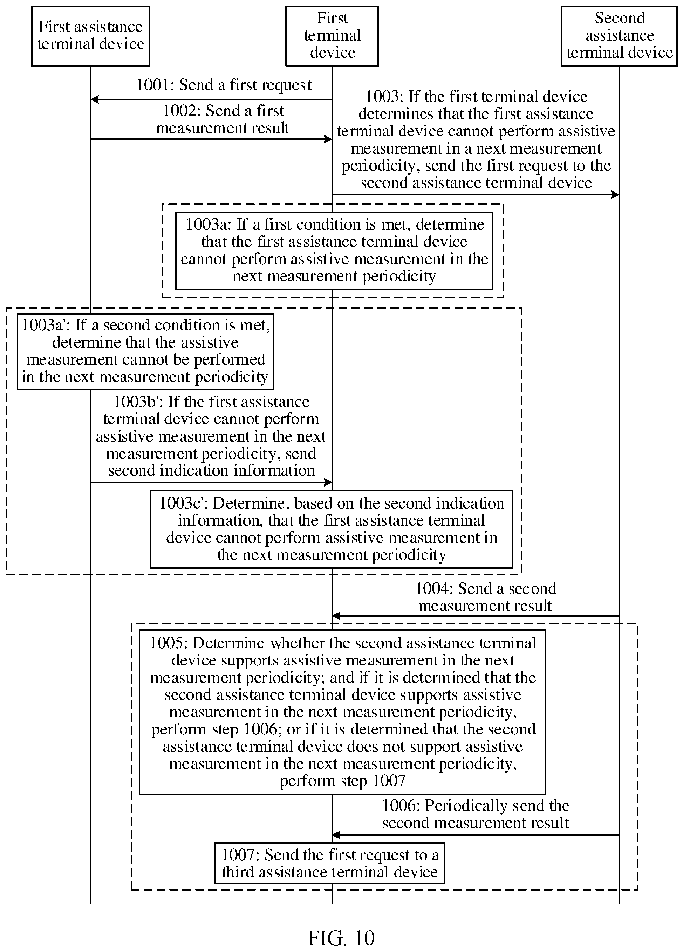

The positioning method provided in embodiments of this application is described with reference to FIG. 10 and the communication system shown in FIG. 8. The first terminal device may be any target terminal device in a communication system shown in FIG. 10, and the second terminal device may be any reference terminal device in the communication system shown in FIG. 10 (or the first terminal device may be any reference terminal device, and the second terminal device may be any target terminal device). The first assistance terminal device may be any assistance terminal device in the communication system shown in FIG. 10. The second assistance terminal device may be any assistance terminal device other than the first assistance terminal device in the communication system shown in FIG. 10. The first terminal device, the second terminal device, the first assistance terminal device, and the second assistance terminal device described in the following embodiments may all have the components shown in FIG. 9. Processing performed by a single execution body (the terminal device or the assistance terminal device) shown in embodiments of this application may alternatively be performed by a plurality of execution bodies. These execution bodies may be logically and/or physically separated. This is not limited.

It should be noted that, in the following embodiments, before performing a ranging/sidelink positioning procedure, the first terminal device and the second terminal device may obtain a ranging authorization policy from the policy control network element in a registration procedure. The ranging authorization policy may indicate whether the terminal device is authorized to perform ranging in which the assistance terminal device participates. The first assistance terminal device and the second assistance terminal device may also obtain a ranging authorization policy from the policy control network element in the registration procedure. The ranging authorization policy may indicate whether the terminal device is authorized to assist in the ranging as an assistance terminal device.

If the first terminal device and the second terminal device determine, according to the ranging authorization policy, that the first terminal device and the second terminal device are authorized to perform ranging in which the assistance terminal device participates, the first assistance terminal device and the second assistance terminal device determine, according to the ranging authorization policy, that the first assistance terminal device and the second assistance terminal device are authorized to participate in the ranging as assistance terminal devices, the first terminal device, the second terminal device, the first assistance terminal device, and the second assistance terminal device may perform positioning measurement according to positioning methods shown in the following embodiments.

FIG. 10 is a flowchart of a positioning method according to an embodiment of this application. As shown in FIG. 10, the method may include the following steps.

Step 1001: A first terminal device sends a first request to a first assistance terminal device. Correspondingly, the first assistance terminal device receives the first request from the first terminal device.

The first request may be used to request a relative position between the first terminal device and a second terminal device, the first request may include identification information of the second terminal device and periodicity information, and the periodicity information may indicate a measurement periodicity.

For example, the relative position between the first terminal device and the second terminal device may be a position of the first terminal device relative to the second terminal device, or the relative position between the first terminal device and the second terminal device may be a position of the second terminal device relative to the first terminal device. This is not limited.

For example, the identification information of the second terminal device may be a subscription permanent identifier (subscription permanent identifier, SUPI), a layer 2 identifier (layer 2 ID), an internet protocol (internet protocol, IP) address, or the like that may indicate the identification information of the second terminal device.

For example, the periodicity information may include one or more of the following: a periodicity interval of the measurement periodicity, start time of the measurement periodicity, end time of the measurement periodicity, a measurement time point of the measurement periodicity, and the like.

Optionally, a third-party terminal device may send a ranging service request to the first terminal device, to request to obtain the relative position between the first terminal device and the second terminal device. The first terminal device may determine, based on the ranging service request, whether the first terminal device and the second terminal device can directly perform ranging/sidelink positioning. If the first terminal device determines that the ranging/sidelink positioning cannot be directly performed with the second terminal device, the first terminal device may initiate a discovery procedure for the assistance terminal device, to discover the first assistance terminal device, and then the first terminal device sends the first request to the first assistance terminal device. When receiving the first request, the first assistance terminal device may perform assistive measurement on the relative position between the first terminal device and the second terminal device based on the first request.

The third-party terminal device may be any terminal device other than the first terminal device and the second terminal device, may be the first terminal device, or may be the second terminal device. This is not limited.

In an example, when initiating the discovery procedure for the assistance terminal device, the first terminal device may send an assistance request to one or more terminal devices, where the assistance request may be used to request to perform assistive measurement. If a terminal device that receives the assistance request determines that the terminal device can provide the assistive measurement for the first terminal device, the terminal device may send an assistance response to the first terminal device, to indicate that the terminal device can provide the assistive measurement for the first terminal device. The first terminal device may determine, based on the received assistance response, the first assistance terminal device from one or more terminal devices that send the assistance response.

The first terminal device may determine the first assistance terminal device based on a sequence of received assistance responses, for example, may determine a terminal device corresponding to a 1st received assistance response as the first assistance terminal device. Alternatively, the first terminal device may determine the first assistance terminal device based on signal strength of the received assistance response, for example, determine a terminal device corresponding to a received assistance response with the highest signal strength as the first assistance terminal device. Alternatively, if the assistance response includes a distance between a current terminal device and the first terminal device, the first terminal device may determine the first assistance terminal device based on the distance in the assistance response, for example, determine a terminal device closest to the first terminal device as the first assistance terminal device.

In another example, the assistance terminal device may continuously send a broadcast message indicating that the assistance terminal device can perform assistive measurement. When initiating the discovery procedure for the assistance terminal device, the first terminal device may determine the first assistance terminal device based on the broadcast message of the assistance terminal device.

The first terminal device may determine the first assistance terminal device based on a sequence of received broadcast messages, for example, may determine a terminal device corresponding to a 1st received broadcast message as the first assistance terminal device. Alternatively, the first terminal device may determine the first assistance terminal device based on signal strength of the received broadcast message, for example, determine a terminal device corresponding to a received broadcast message with the highest signal strength as the first assistance terminal device.

Optionally, the first request further includes one or more of the following: a measurement result type, a quality of service requirement, and first indication information.

The measurement result type may include one or more of the following: a distance, a direction, and an angle. The quality of service requirement may include one or more of the following: a precision requirement, a latency requirement, a reliability requirement, and an integrity requirement of a measurement result. The first indication information may indicate to perform measurement by using the assistance terminal device.

The precision requirement may indicate a precision requirement of the measurement result. The latency requirement may indicate latency of obtaining the measurement result by the first terminal device. The reliability requirement may indicate reliability of the measurement result.

Step 1002: The first assistance terminal device sends a first measurement result to the first terminal device. Correspondingly, the first terminal device receives the first measurement result from the first assistance terminal device.

The measurement result indicates the relative position between the first terminal device and the second terminal device.

When receiving the first request sent by the first terminal device, the first assistance terminal device may separately perform ranging/sidelink positioning measurement on the first terminal device and the second terminal device, to obtain a measurement result between the first assistance terminal device and the first terminal device and a measurement result between the first assistance terminal device and the second terminal device.

In an example, the first assistance terminal device may report the measurement result between the first assistance terminal device and the first terminal device and the measurement result between the first assistance terminal device and the second terminal device to the first terminal device as the first measurement result, and the first terminal determines the relative position between the first terminal device and the second terminal device based on the measurement result between the first assistance terminal device and the first terminal device and the measurement result between the first assistance terminal device and the second terminal device. The first terminal device may further send the relative position between the first terminal device and the second terminal device to the third-party terminal device.

In another example, the first assistance terminal device may alternatively determine the relative position between the first terminal device and the second terminal device based on the measurement result between the first assistance terminal device and the first terminal device and the measurement result between the first assistance terminal device and the second terminal device, and report the relative position between the first terminal device and the second terminal device to the first terminal device as the first measurement result. The first terminal device sends the relative position between the first terminal device and the second terminal device to the third-party terminal device based on the first measurement result.

Optionally, the first assistance terminal device may separately perform ranging/sidelink positioning measurement on the first terminal device and the second terminal device according to any one of methods such as a ranging method based on received signal strength and a ranging method based on time of flight. This is not limited.

In an example, the first assistance terminal device may establish a PC5 connection to the first terminal device, and perform ranging/sidelink positioning measurement based on the PC5 connection, to obtain the measurement result between the first assistance terminal device and the first terminal device. The first assistance terminal device may also establish a PC5 connection to the second terminal device, and perform ranging/sidelink positioning measurement based on the PC5 connection, to obtain the measurement result between the first assistance terminal device and the second terminal device.

In another example, the first assistance terminal device may alternatively not need to establish a PC5 connection to the first terminal device/the second terminal device. The first assistance terminal device may perform ranging/sidelink positioning measurement based on a positioning reference signal sent by the first terminal device, to obtain the measurement result between the first assistance terminal device and the first terminal device. The first assistance terminal device may also perform ranging/sidelink positioning measurement based on a positioning reference signal sent by the second terminal device, to obtain the measurement result between the first assistance terminal device and the second terminal device.

The first request may include related information of the positioning reference signal of the first terminal device and/or related information of the positioning reference signal of the second terminal device.

For example, the related information of the positioning reference signal may include information such as frequency information and a signal propagation direction of the positioning reference signal.

Step 1003: If the first terminal device determines that the first assistance terminal device cannot perform assistive measurement in a next measurement periodicity, the first terminal device sends the first request to a second assistance terminal device. Correspondingly, the second assistance terminal device receives the first request from the first terminal device.

If the first terminal device determines that the first assistance terminal device cannot perform assistive measurement in the next measurement periodicity, the first terminal device may send the first request to the second assistance terminal device, to request the second assistance terminal device to perform assistive measurement based on the first request. If the first terminal device determines that the first assistance terminal device can continue to perform assistive measurement in the next measurement periodicity, the first terminal device may continue to perform assistive measurement by using the first assistance terminal device.

For example, the first terminal device may determine, based on the following step 1003a, whether the first assistance terminal device can perform assistive measurement in the next measurement periodicity, or may determine, based on the following step 1003a', step 1003b', and step 1003c', whether the first assistance terminal device can perform assistive measurement in the next measurement periodicity.

Step 1003a: If a first condition is met, the first terminal device determines that the first assistance terminal device cannot perform assistive measurement in the next measurement periodicity.

The first condition may include one or more of the following: A distance between the first terminal device and the first assistance terminal device is greater than or equal to a preset distance, a moving speed of the first terminal device relative to the first assistance terminal device is greater than or equal to a preset speed, signal strength of a first signal is less than or equal to preset signal strength, and a difference between a direction of the first signal and a preset direction is greater than or equal to a preset difference. The first signal may be a signal received by the first terminal device from the first assistance terminal device.

The first terminal device may determine the distance between the first terminal device and the first assistance terminal device based on the measurement result between the first assistance terminal device and the first terminal device. The first terminal device determines the moving speed of the first terminal device relative to the first assistance terminal device based on the distance between the first terminal device and the first assistance terminal device and moving time of the first terminal device.

Optionally, the first terminal device periodically determines, based on the first condition, whether the first assistance terminal device supports assistive measurement in the next measurement periodicity.

A measurement periodicity in which the first terminal device determines, based on the first condition, whether the first assistance terminal device supports assistive measurement in the next measurement periodicity may be predefined in a protocol, may be preconfigured by a network device, or may be customized by the first terminal device. This is not limited.

For example, each time the first terminal device receives the first measurement result, the first terminal device may determine whether the first assistance terminal device supports assistive measurement in the next measurement periodicity. In other words, the periodicity in which the first terminal device determines, based on the first condition, whether the first assistance terminal device supports assistive measurement in the next measurement periodicity is consistent with a periodicity in which the first assistance terminal device reports the first measurement result to the first terminal device.

With reference to the following step 1003a', it is similar to determining, by the first terminal device based on the first condition, whether the first assistance terminal device can perform assistive measurement in the next measurement periodicity that the first assistance terminal device may alternatively determine, based on a second condition, whether the first assistance terminal device can perform assistive measurement in the next measurement periodicity.

Step 1003a': If the second condition is met, the first assistance terminal device determines that the assistive measurement cannot be performed in the next measurement periodicity.

The second condition may include one or more of the following: A distance between the first terminal device and the first assistance terminal device is greater than or equal to a preset distance, a moving speed of the first terminal device relative to the first assistance terminal device is greater than or equal to a preset speed, signal strength of a second signal is less than or equal to preset signal strength, and a difference between a direction of the second signal and a preset direction is greater than or equal to a preset difference. The second signal may be a signal received by the first assistance terminal device from the first terminal device.

The first assistance terminal device may determine the distance between the first terminal device and the first assistance terminal device based on the measurement result between the first assistance terminal device and the first terminal device. The first assistance terminal device may further determine the moving speed of the first terminal device relative to the first assistance terminal device based on the distance between the first terminal device and the first assistance terminal device and moving time of the first terminal device.

Optionally, the first assistance terminal device periodically determines, based on the second condition, whether the first assistance terminal device supports assistive measurement in the next measurement periodicity.

A measurement periodicity in which the first assistance terminal device determines, based on the second condition, whether the first assistance terminal device supports assistive measurement in the next measurement periodicity may be predefined in a protocol, may be preconfigured by a network device, or may be customized by the first assistance terminal device. This is not limited.

For example, each time the first assistance terminal device sends the first measurement result to the first terminal device, the first assistance terminal device may determine whether the first assistance terminal device supports assistive measurement in the next measurement periodicity. In other words, the periodicity in which the first assistance terminal device determines, based on the second condition, whether the first assistance terminal device supports assistive measurement in the next measurement periodicity is consistent with a periodicity in which the first assistance terminal device reports the first measurement result to the first terminal device.

Step 1003b': If the first assistance terminal device cannot perform assistive measurement in the next measurement periodicity, the first assistance terminal device sends second indication information to the first terminal device. Correspondingly, the first terminal device receives the second indication information from the first assistance terminal device.

The second indication information may indicate that the assistive measurement is terminated.

Optionally, the first assistance terminal device may include the second indication information and the first measurement result in same signaling and send the same signaling to the first terminal device, or may include the second indication information and the first measurement result in different signaling and send the different signaling to the first terminal device.

Optionally, when determining that the first assistance terminal device cannot perform assistive measurement in the next measurement periodicity, the first assistance terminal device may send the second indication information to the first terminal device; or when determining that the first assistance terminal device can perform assistive measurement in the next measurement periodicity, the first assistance terminal device may send no indication information to the first terminal device. It may be understood that, when determining that the first assistance terminal device can perform assistive measurement in the next measurement periodicity, the first assistance terminal device may alternatively send, to the first terminal device, indication information indicating to continue the assistive measurement. This is not limited.

Step 1003c': The first terminal device determines, based on the second indication information, that the first assistance terminal device cannot perform assistive measurement in the next measurement periodicity.

Based on the foregoing descriptions, when determining that the first assistance terminal device cannot perform assistive measurement in the next measurement periodicity, the first terminal device may initiate the discovery procedure for the assistance terminal device, to discover the second assistance terminal device, and then send the first request to the second assistance terminal device. When receiving the first request, the second assistance terminal device may perform assistive measurement on the relative position between the first terminal device and the second terminal device based on the first request.

For descriptions of discovering the second assistance terminal device by the first terminal device, refer to the foregoing related descriptions of discovering the first assistance terminal device by the first terminal device. Details are not described again.

Step 1004: The second assistance terminal device sends a second measurement result to the first terminal device. Correspondingly, the first terminal device receives the second measurement result from the second assistance terminal device.

The measurement result indicates the relative position between the first terminal device and the second terminal device.

When receiving the first request sent by the first terminal device, the second assistance terminal device may separately perform ranging/sidelink positioning measurement on the first terminal device and the second terminal device, to obtain a measurement result between the second assistance terminal device and the first terminal device and a measurement result between the second assistance terminal device and the second terminal device.

In an example, the second assistance terminal device may report the measurement result between the second assistance terminal device and the first terminal device and the measurement result between the second assistance terminal device and the second terminal device to the first terminal device as the second measurement result, and the first terminal determines the relative position between the first terminal device and the second terminal device based on the measurement result between the second assistance terminal device and the first terminal device and the measurement result between the second assistance terminal device and the second terminal device. The first terminal device may further send the relative position between the first terminal device and the second terminal device to the third-party terminal device.

In another example, the second assistance terminal device may alternatively determine the relative position between the first terminal device and the second terminal device based on the measurement result between the second assistance terminal device and the first terminal device and the measurement result between the second assistance terminal device and the second terminal device, and report the relative position between the first terminal device and the second terminal device to the first terminal device as the second measurement result. The first terminal device sends the relative position between the first terminal device and the second terminal device to the third-party terminal device based on the second measurement result.

It should be noted that, for descriptions of separately performing, by the second assistance terminal device, ranging/sidelink positioning measurement on the first terminal device and the second terminal device, refer to the foregoing related descriptions of separately performing, by the first assistance terminal device, ranging/sidelink positioning measurement on the first terminal device and the second terminal device. Details are not described again.

Optionally, when the first terminal device receives the second measurement result of the second assistance terminal device, the following step 1005 to step 1007 may be further performed.

Step 1005: The first terminal device determines whether the second assistance terminal device supports assistive measurement in the next measurement periodicity. If the first terminal device determines that the second assistance terminal device supports assistive measurement in the next measurement periodicity, step 1006 is performed; or if the first terminal device determines that the second assistance terminal device does not support assistive measurement in the next measurement periodicity, step 1007 is performed.

For descriptions of determining, by the first terminal device, whether the second assistance terminal device supports assistive measurement in the next measurement periodicity, refer to the foregoing related descriptions of determining, by the first terminal device, whether the first assistance terminal device supports assistive measurement in the next measurement periodicity in step 1003. Details are not described again.

Step 1006: The second assistance terminal device periodically sends the second measurement result to the first terminal device.

If the second assistance terminal device can support assistive measurement in the next measurement periodicity, the second assistance terminal device may periodically perform ranging/sidelink positioning measurement on the first terminal device and the second terminal device based on the measurement periodicity in the first request, and send the second measurement result to the first terminal device.

Step 1007: The first terminal device sends the first request to a third assistance terminal device.

If the second assistance terminal device cannot perform assistive measurement in the next measurement periodicity, the first terminal device may re-initiate the discovery procedure for the assistance terminal device, and re-search for an assistance terminal device (for example, the third assistance terminal device) to perform assistive measurement.

According to the method shown in FIG. 10, the first terminal device may send the first request to the first assistance terminal device, to implement periodic ranging/sidelink positioning that is based on the first assistance terminal device. Further, the first terminal device/first assistance terminal device may independently determine whether the first assistance terminal device supports assistive measurement in the next measurement periodicity. If the first assistance terminal device cannot perform assistive measurement in the next measurement periodicity, the first terminal device may search for a new assistance terminal device (for example, the second assistance terminal device), and send the first request to the new assistance terminal device, to perform periodic ranging/sidelink positioning by using the new assistance terminal device. This avoids interruption of a positioning service caused because the first assistance terminal device cannot continue the assistive measurement, ensures continuity of the positioning service in an assistance terminal device handover scenario, and increases a positioning success rate.

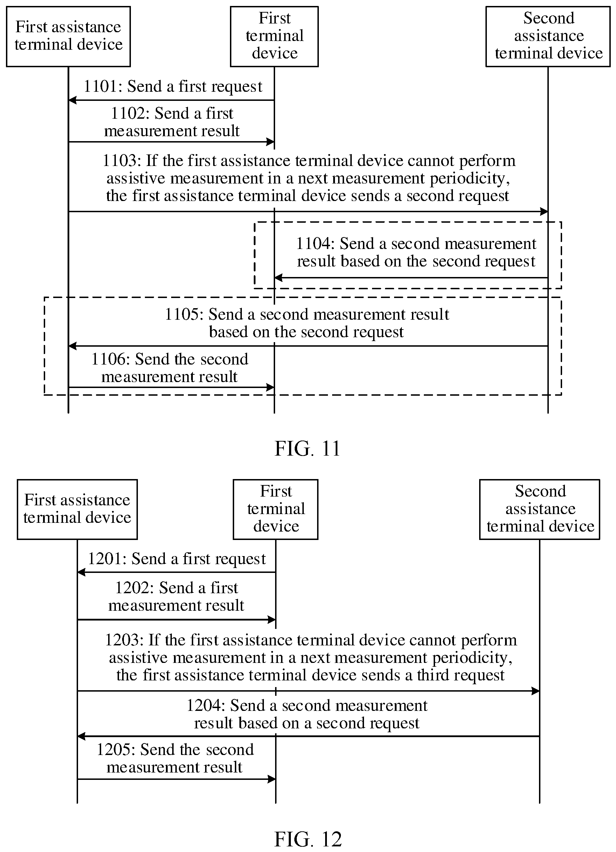

With reference to FIG. 11, it is different from FIG. 10 in which the first terminal device searches for the new assistance terminal device when the first assistance terminal device cannot perform assistive measurement in the next measurement periodicity that the first assistance terminal device may send a second request when the first assistance terminal device cannot perform assistive measurement in the next measurement periodicity, to search for the new assistance terminal device.

FIG. 11 is a flowchart of a positioning method according to an embodiment of this application. As shown in FIG. 11, the method may include the following steps.

Step 1101: A first terminal device sends a first request to a first assistance terminal device. Correspondingly, the first assistance terminal device receives the first request from the first terminal device.

For descriptions of step 1101, refer to the foregoing related descriptions of step 1001. Details are not described again.

Step 1102: The first assistance terminal device sends a first measurement result to the first terminal device. Correspondingly, the first terminal device receives the first measurement result from the first assistance terminal device.

For descriptions of step 1102, refer to the foregoing related descriptions of step 1002. Details are not described again.

Step 1103: If the first assistance terminal device cannot perform assistive measurement in a next measurement periodicity, the first assistance terminal device sends a second request. Correspondingly, one or more second assistance terminal devices receive the second request from the first assistance terminal device.

The second request may be used to request the second assistance terminal device to assist in determining a relative position between the first terminal device and a second terminal device, the second request may include identification information of the first terminal device, identification information of the second terminal device, and periodicity information, and the periodicity information may indicate a measurement periodicity.

The first assistance terminal device may independently determine whether the first assistance terminal device can support assistive measurement in the next measurement periodicity. If first assistance terminal device determines that the first assistance terminal device does not support assistive measurement in the next measurement periodicity, the first assistance terminal device may send the second request.

For descriptions of determining, by the first assistance terminal device, whether the first assistance terminal device can support assistive measurement in the next measurement periodicity, refer to the foregoing related descriptions of determining, by the first assistance terminal device, whether the first assistance terminal device can support assistive measurement in the next measurement periodicity in step 1003. Details are not described again.

Optionally, the second request further includes one or more of the following: a measurement result type, a quality of service requirement, and first indication information.

For the measurement result type, the quality of service requirement, and the first indication information, refer to the foregoing related descriptions of the measurement result type, the quality of service requirement, and the first indication information in step 1001. Details are not described again.

In an example, the first assistance terminal device may broadcast the second request.

The second assistance terminal device may be one or more assistance terminal devices that receive the second request.

In another example, the first assistance terminal device may determine the one or more second assistance terminal devices from one or more assistance terminal devices, and send the second request to the one or more second assistance terminal devices.

The first assistance terminal device may initiate a discovery procedure for the assistance terminal device, to discover the assistance terminal device that exists around. If an assistance terminal device and the first terminal device meet a third condition, the first assistance terminal device may consider the assistance terminal device as the second assistance terminal device, and send the second request to the assistance terminal device.

The third condition may be one or more of the following: The assistance terminal device is in a moving direction of the first terminal device, a distance between the assistance terminal device and the first terminal device continuously decreases, and the distance between the assistance terminal device and the first terminal device is less than a distance between the first assistance terminal device and the first terminal device.

It is different from the foregoing two examples in which the first assistance terminal device independently determines the one or more second assistance terminal devices that the first assistance terminal device may alternatively trigger, by sending the second request, one or more assistance terminal devices that receive the second request to perform a discovery procedure for the first terminal device, and the first terminal device further determines the one or more second assistance terminal devices from the one or more assistance terminal devices.

For example, the one or more assistance terminal devices that receive the second request may send a discovery request to the first terminal device, and the first terminal device may determine the one or more second assistance terminal devices based on the one or more assistance terminal devices, and send a discovery response to the one or more second assistance terminal devices. In other words, an assistance terminal device that receives the discovery response is the second assistance terminal device.

For descriptions of determining, by the first terminal device, the one or more second assistance terminal devices from the one or more assistance terminal devices, refer to the foregoing related descriptions of discovering the second assistance terminal device by the first terminal device in step 1003. Details are not described again.

Optionally, based on the foregoing descriptions of the second assistance terminal device, the second assistance terminal device may further initiate a discovery request for the second terminal device based on the second request, to discover the second terminal device.

Optionally, when determining to perform assistive measurement based on the second request, the second assistance terminal device may further send third indication information to the first assistance terminal device. The first assistance terminal device may stop, based on the third indication information, performing assistive measurement based on the first request.

The third indication information may indicate that second assistance terminal device determines to perform assistive measurement based on the second request.

Step 1104: The second assistance terminal device sends a second measurement result to the first terminal device based on the second request.

The second assistance terminal device may separately perform ranging/sidelink positioning measurement on the first terminal device and the second terminal device based on the second request, to obtain a measurement result between the second assistance terminal device and the first terminal device and a measurement result between the second assistance terminal device and the second terminal device, and send the second measurement result to the first terminal device.

For descriptions of the second measurement result, refer to the foregoing descriptions of the second measurement result in step 1004. Details are not described again.

It should be noted that, for descriptions of separately performing, by the second assistance terminal device, ranging/sidelink positioning measurement on the first terminal device and the second terminal device, refer to the foregoing related descriptions of separately performing, by the second assistance terminal device, ranging/sidelink positioning measurement on the first terminal device and the second terminal device in step 1004.

Details are not described again.

Optionally, when the first terminal device receives the second measurement result of the second assistance terminal device, step 1005 to step 1007 may be further performed, to determine whether the second assistance terminal device supports assistive measurement in the next measurement periodicity. If it is determined that the second assistance terminal device supports assistive measurement in the next measurement periodicity, the second assistance terminal device may periodically send the second measurement result to the first terminal device; or if it is determined that the second assistance terminal device does not support assistive measurement in the next measurement periodicity, the first terminal device may re-initiate the discovery procedure for the assistance terminal device, and re-search for an assistance terminal device (for example, a third assistance terminal device) to perform assistive measurement.

Alternatively, it is different from step 1104 in which the second assistance terminal device sends the second measurement result to the first terminal device based on the second request that the second assistance terminal device may perform the following step 1105.

Step 1105: The second assistance terminal device sends a second measurement result to the first assistance terminal device based on the second request.

Step 1106: The first assistance terminal device sends the second measurement result to the first terminal device.

The second assistance terminal device may directly send the second measurement result to the first terminal device, or may send the second measurement result to the first terminal device via the first assistance terminal device. This is not limited.

According to the method shown in FIG. 11, the first terminal device may send the first request to the first assistance terminal device, to implement periodic ranging/sidelink positioning that is based on the first assistance terminal device. Further, the first assistance terminal device may independently determine whether the first assistance terminal device supports assistive measurement in the next measurement periodicity. If the first assistance terminal device cannot perform assistive measurement in the next measurement periodicity, the first assistance terminal device may search for a new assistance terminal device (for example, the second assistance terminal device), and the first terminal device may not need to actively initiate the discovery procedure for the assistance terminal device, so that interference to the first terminal device can be reduced. In addition, the first assistance terminal device sends the second request to the new assistance terminal device, so that the periodic ranging/sidelink positioning can be performed by using the new assistance terminal device. This avoids interruption of a positioning service caused because the first assistance terminal device cannot continue the assistive measurement, ensures continuity of the positioning service in an assistance terminal device handover scenario, and increases a positioning success rate.

With reference to FIG. 12, it is different from FIG. 11 in which the first assistance terminal device sends the second request to the second assistance terminal device that the first assistance terminal device may alternatively send a third request to the second assistance terminal device, to request the second assistance terminal device to measure the relative position between the first terminal device and the second terminal device.

FIG. 12 is a positioning method according to an embodiment of this application. As shown in FIG. 12, the method may include the following steps.

Step 1201: A first terminal device sends a first request to a first assistance terminal device. Correspondingly, the first assistance terminal device receives the first request from the first terminal device.

For descriptions of step 1201, refer to the foregoing related descriptions of step 1001. Details are not described again.

Step 1202: The first assistance terminal device sends a first measurement result to the first terminal device. Correspondingly, the first terminal device receives the first measurement result from the first assistance terminal device.

For descriptions of step 1202, refer to the foregoing related descriptions of step 1002. Details are not described again.

Step 1203: If the first assistance terminal device cannot perform assistive measurement in a next measurement periodicity, the first assistance terminal device sends a third request. Correspondingly, one or more second assistance terminal devices receive the third request from the first assistance terminal device.

The third request may be used to request the second assistance terminal device to assist in determining a relative position between the first terminal device and a second terminal device, and the third request may include periodicity information, related information of a positioning reference signal of the first terminal device, and related information of a positioning reference signal of the second terminal device.

The related information of the positioning reference signal may include information such as frequency information and a signal propagation direction of the positioning reference signal.

The first assistance terminal device may independently determine whether the first assistance terminal device can support assistive measurement in the next measurement periodicity. If the first assistance terminal device determines that the first assistance terminal device does not support assistive measurement in the next measurement periodicity, the first assistance terminal device may send the third request.

For descriptions of determining, by the first assistance terminal device, whether the first assistance terminal device can support assistive measurement in the next measurement periodicity, refer to the foregoing related descriptions of determining, by the first assistance terminal device, whether the first assistance terminal device can support assistive measurement in the next measurement periodicity in step 1003. Details are not described again.

In an example, the first assistance terminal device may broadcast the third request.

The second assistance terminal device may be one or more assistance terminal devices that receive the third request.

In another example, the first assistance terminal device may determine the one or more second assistance terminal devices from one or more assistance terminal devices, and send the third request to the one or more second assistance terminal devices.

The first assistance terminal device may initiate a discovery procedure for the assistance terminal device, to discover the assistance terminal device that exists around. If an assistance terminal device and the first terminal device meet a third condition, the first assistance terminal device may consider the assistance terminal device as the second assistance terminal device, and send the third request to the assistance terminal device.

For descriptions of the third condition, refer to the foregoing related descriptions of the third condition in step 1103. Details are not described again.

Step 1204: The second assistance terminal device sends a second measurement result to the first assistance terminal device based on a second request.

The second assistance terminal device may not need to establish a PC5 connection to the first terminal device/the second terminal device. The second assistance terminal device may perform ranging/sidelink positioning measurement based on the positioning reference signal sent by the first terminal device, to obtain a measurement result between the second assistance terminal device and the first terminal device. The second assistance terminal device may also perform ranging/sidelink positioning measurement based on the positioning reference signal sent by the second terminal device, to obtain a measurement result between the second assistance terminal device and the second terminal device, and further send the second measurement result to the first assistance terminal device.

Step 1205: The first assistance terminal device sends the second measurement result to the first terminal device.

For descriptions of the second measurement result, refer to the foregoing descriptions of the second measurement result in step 1004. Details are not described again.

According to the method shown in FIG. 12, the first terminal device may send the first request to the first assistance terminal device, to implement periodic ranging/sidelink positioning that is based on the first assistance terminal device. Further, the first assistance terminal device may independently determine whether the first assistance terminal device supports assistive measurement in the next measurement periodicity. If the first assistance terminal device cannot perform assistive measurement in the next measurement periodicity, the first assistance terminal device may search for a new assistance terminal device (for example, the second assistance terminal device), and send the third request to the second assistance terminal device. The second assistance terminal device may perform ranging/sidelink positioning measurement based on the third request, and send the second measurement result to the first assistance terminal device. Then, the first assistance terminal device sends the received second measurement result to the first terminal device. This avoids interruption of a positioning service caused because the first assistance terminal device cannot continue the assistive measurement, ensures continuity of the positioning service in an assistance terminal device handover scenario, and increases a positioning success rate.

In addition, the second assistance terminal device performs ranging/sidelink positioning measurement based on the positioning reference signals of the first terminal device and the second terminal device in the third request, and sends the second measurement result obtained through measurement to the first assistance terminal device. Therefore, the first terminal device always receives the measurement result from the first assistance terminal device, and does not sense handover of the assistance terminal device.

It should be noted that the methods provided in embodiments of this application may be implemented separately, or may be implemented in combination. This is not limited.

It may be understood that, in embodiments of this application, an execution body may perform a part or all of steps in embodiments of this application. These steps or operations are merely examples. In embodiments of this application, other operations or variations of various operations may be further performed. In addition, the steps may be performed in a sequence different from a sequence presented in embodiments of this application, and it is possible that not all operations in embodiments of this application need to be performed.

The solutions provided in embodiments of this application are mainly described above from a perspective of interaction between the devices. It may be understood that, to implement the foregoing functions, each device includes a corresponding hardware structure and/or a corresponding software module for performing each function. A person skilled in the art should easily be aware that, in combination with algorithm steps of the examples described in embodiments disclosed in this specification, this application may be implemented by hardware or a combination of hardware and computer software. Whether a function is performed by hardware or hardware driven by computer software depends on a particular application and a design constraint of the technical solutions. A person skilled in the art may use different methods to implement the described functions for each specific application. However, it should not be considered that this implementation goes beyond the scope of this application.

In embodiments of this application, the devices may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, and is only logical function division. During actual implementation, another division manner may be used.

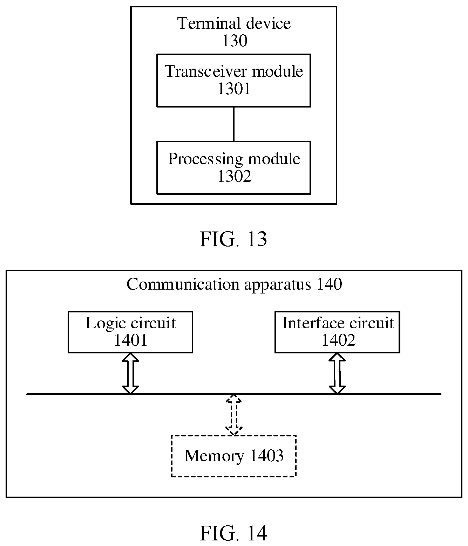

When each functional module is obtained through division based on each corresponding function, FIG. 13 shows a terminal device 130. The terminal device 130 may perform the action performed by the first terminal device in FIG. 10 to FIG. 12, perform the action performed by the first assistance terminal device in FIG. 10 to FIG. 12, or perform the action performed by the second assistance terminal device in FIG. 10 to FIG. 12.

The terminal device 130 may include a transceiver module 1301 and a processing module 1302. For example, the terminal device 130 may be a terminal device, or may be a chip used in the terminal device or another combined component, part, or the like that has a function of the terminal device. When the terminal device 130 is the terminal device, the transceiver module 1301 may be a transceiver, where the transceiver may include an antenna, a radio frequency circuit, and the like; and the processing module 1302 may be a processor (or a processing circuit), for example, a baseband processor, where the baseband processor may include one or more CPUs. When the terminal device 130 is the part that has the function of the terminal device, the transceiver module 1301 may be a radio frequency unit, and the processing module 1302 may be a processor (or a processing circuit), for example, a baseband processor. When the terminal device 130 is a chip system, the transceiver module 1301 may be an input/output interface of a chip (for example, a baseband chip), and the processing module 1302 may be a processor (or a processing circuit) of the chip system, and may include one or more central processing units. It should be understood that the transceiver module 1301 in this embodiment of this application may be implemented by a transceiver or a transceiver-related circuit component, and the processing module 1302 may be implemented by a processor or a processor-related circuit component (or referred to as a processing circuit).

For example, the transceiver module 1301 may be configured to perform all sending and receiving operations performed by the terminal device in the embodiments shown in FIG. 10 to FIG. 12, and/or configured to support another process of the technology described in this specification. The processing module 1302 may be configured to perform all operations other than the sending and receiving operations performed by the terminal device in the embodiments shown in FIG. 10 to FIG. 12, and/or configured to support the another process of the technology described in this specification.

In another possible implementation, the transceiver module 1301 in FIG. 13 may be replaced with a transceiver, where a function of the transceiver module 1301 may be integrated into the transceiver; and the processing module 1302 may be replaced with a processor, where a function of the processing module 1302 may be integrated into the processor. Further, the terminal device 130 shown in FIG. 13 may further include a memory.

Alternatively, when the processing module 1302 is replaced with the processor, and the transceiver module 1301 is replaced with the transceiver, the terminal device 130 in this embodiment of this application may be a communication apparatus 140 shown in FIG. 14. The processor may be a logic circuit 1401, and the transceiver may be an interface circuit 1402. Further, the communication apparatus 140 shown in FIG. 14 may further include a memory 1403.

An embodiment of this application further provides a computer program product. When the computer program product is executed by a computer, a function of any one of the foregoing method embodiments may be implemented.

An embodiment of this application further provides a computer program. When the computer program is executed by a computer, a function of any one of the foregoing method embodiments may be implemented.

An embodiment of this application further provides a computer-readable storage medium. All or a part of procedures in the foregoing method embodiments may be implemented by a computer program instructing related hardware. The program may be stored in the computer-readable storage medium. When the program is executed, the procedures in the foregoing method embodiments may be performed. The computer-readable storage medium may be an internal storage unit in the terminal in any one of the foregoing embodiments (including a data transmit end and/or a data receive end), for example, a hard disk or memory of the terminal. The computer-readable storage medium may alternatively be an external storage device of the foregoing terminal, for example, a plug-in hard disk drive, a smart media card (smart media card, SMC), a secure digital (secure digital, SD) card, or a flash card (flash card) that is configured on the terminal. Further, the computer-readable storage medium may alternatively include both an internal storage unit and an external storage device of the foregoing terminal. The computer-readable storage medium is configured to store the computer program and other programs and data required by the terminal. The computer-readable storage medium may be further configured to temporarily store data that has been output or is to be output.

It should be noted that in the specification, claims, and accompanying drawings of this application, the terms "first", "second", and the like are intended to distinguish between different objects, but are not intended to describe a particular sequence. "First" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments, unless otherwise specified, "a plurality of" means two or more.

In addition, the terms "including" and "having" and any other variants thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item) "means one or more. "A plurality of" means two or more. "At least two (items) "means two, three, or more. The term "and/or" is used to describe an association relationship between associated objects, and indicates that three relationships may exist. For example, "A and/or B" may represent three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one of a, b, or c may indicate a, b, c, a and b, a and c, b and c, or a, b, and c, where a, b, and c may be singular or plural. Both "when ..." and "if" mean that corresponding processing is performed in an objective case, are not intended to limit time, do not require a determining action during implementation, and do not mean that there is another limitation.

In embodiments of this application, the word such as "example" or "for example" represents giving an example, an illustration, or a description. Any embodiment or design scheme described as an "example" or "for example" in embodiments of this application should not be explained as being more preferred or having more advantages than another embodiment or design scheme. Exactly, use of the term such as "for example" is intended to present a related concept in a specific manner for ease of understanding.

Based on descriptions of the foregoing implementations, a person skilled in the art may clearly understand that, for the purpose of convenient and brief description, division of the foregoing functional modules is merely used as an example for description. During actual application, the foregoing functions may be allocated to different functional modules for implementation based on a requirement. In other words, an internal structure of an apparatus is divided into different functional modules to implement all or a part of the functions described above.

In several embodiments provided in this application, it should be understood that the disclosed apparatuses and methods may be implemented in other manners. For example, the described apparatus embodiment is merely an example. For example, the module or division into the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electronic, a mechanical, or another form.

The units described as separate parts may or may not be physically separate, and the parts displayed as units may be one physical unit or a plurality of physical units, in other words, may be located in one place, or may be distributed in a plurality of different places. A part or all of the units may be selected based on an actual requirement to achieve objectives of the solutions of embodiments.

In addition, functional units in embodiments of this application may be integrated into one processing unit, or each unit may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a readable storage medium. Based on such an understanding, the technical solutions in embodiments of this application essentially or all or a part of the technical solutions may be embodied in a form of a software product. The software product is stored in a storage medium, and includes several instructions for enabling a device (which may be a single-chip microcomputer, a chip, or the like) or a processor (processor) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

**Claims**

1. A positioning method, comprising:

sending, by a first terminal device, a first request to a first assistance terminal device, wherein the first request is used to request a relative position between the first terminal device and a second terminal device, the first request comprises identification information of the second terminal device and periodicity information, and the periodicity information indicates a measurement periodicity;

receiving, by the first terminal device, a first measurement result from the first assistance terminal device;

if the first terminal device determines that the first assistance terminal device cannot perform assistive measurement in a next measurement periodicity, sending, by the first terminal device, the first request to a second assistance terminal device; and

receiving, by the first terminal device, a second measurement result from the second assistance terminal device, wherein

the measurement result indicates the relative position between the first terminal device and the second terminal device.

2. The method according to claim 1, wherein

the first request further comprises one or more of the following: a measurement result type, a quality of service requirement, and first indication information, wherein

the measurement result type comprises one or more of the following: a distance, a direction, and an angle; the quality of service requirement comprises one or more of the following: a precision requirement, a latency requirement, a reliability requirement, and an integrity requirement of the measurement result; and the first indication information indicates to perform measurement by using the assistance terminal device.

3. The method according to claim 1 or 2, wherein that the first terminal device determines that the first assistance terminal device cannot perform assistive measurement in a next measurement periodicity comprises:

receiving, by the first terminal device, second indication information from the first assistance terminal device, wherein the second indication information indicates that the assistive measurement is terminated; and

determining, by the first terminal device based on the second indication information, that the first assistance terminal device cannot perform assistive measurement in the next measurement periodicity.

4. The method according to claim 1 or 2, wherein that the first terminal device determines that the first assistance terminal device cannot perform assistive measurement in a next measurement periodicity comprises:

if a first condition is met, determining, by the first terminal device, that the first assistance terminal device cannot perform assistive measurement in the next measurement periodicity, wherein the first condition comprises one or more of the following: a distance between the first terminal device and the first assistance terminal device is greater than or equal to a preset distance, a moving speed of the first terminal device relative to the first assistance terminal device is greater than or equal to a preset speed, signal strength of a first signal is less than or equal to preset signal strength, and a difference between a direction of the first signal and a preset direction is greater than or equal to a preset difference, wherein the first signal is a signal received by the first terminal device from the first assistance terminal device.

5. The method according to claim 4, wherein the method further comprises:
periodically determining, by the first terminal device based on the first condition, whether the first assistance terminal device supports assistive measurement in the next measurement periodicity.

6. A positioning method, comprising:

receiving, by a first assistance terminal device, a first request from a first terminal device, wherein the first request is used to request a relative position between the first terminal device and a second terminal device, the first request comprises identification information of the second terminal device and periodicity information, and the periodicity information indicates a measurement periodicity;
sending, by the first assistance terminal device, a first measurement result to the first terminal device, wherein the measurement result indicates the relative position between the first terminal device and the second terminal device; and if the first assistance terminal device cannot perform assistive measurement in a next measurement periodicity, sending, by the first assistance terminal device, second indication information to the first terminal device, wherein the second indication information indicates that the assistive measurement is terminated.

7. The method according to claim 6, wherein

the first request further comprises one or more of the following: a measurement result type, a quality of service requirement, and first indication information, wherein
the measurement result type comprises one or more of the following: a distance, a direction, and an angle; the quality of service requirement comprises one or more of the following: a precision requirement, a latency requirement, a reliability requirement, and an integrity requirement of the measurement result; and the first indication information indicates to perform measurement by using the assistance terminal device.

8. The method according to claim 6 or 7, wherein the method further comprises:

if a second condition is met, determining, by the first assistance terminal device, that the assistive measurement cannot be performed in the next measurement periodicity, wherein the second condition comprises one or more of the following: a distance between the first terminal device and the first assistance terminal device is greater than or equal to a preset distance, a moving speed of the first terminal device relative to the first assistance terminal device is greater than or equal to a preset speed, signal strength of a second signal is less than or equal to preset signal strength, and a difference between a direction of the second signal and a preset direction is greater than or equal to a preset difference, wherein the second signal is a signal received by the first assistance terminal device from the first terminal device.

9. The method according to claim 8, wherein the method further comprises:
periodically determining, by the first assistance terminal device based on the second condition, whether assistive measurement is supported in the next measurement periodicity.

10. A positioning method, comprising:

sending, by a first terminal device, a first request to a first assistance terminal device, wherein the first request is used to request a relative position between the first terminal device and a second terminal device, the first request comprises identification information of the second terminal device and periodicity information, and the periodicity information indicates a measurement periodicity;
receiving, by the first terminal device, a first measurement result from the first assistance terminal device; and

receiving, by the first terminal device, a second measurement result from one or more second assistance terminal devices, wherein the second measurement result is determined by the second assistance terminal device based on a second request sent by the first assistance terminal device, the second request is used to request the second assistance terminal device to assist in determining the relative position between the first terminal device and the second terminal device, and the second request comprises identification information of the first terminal device, the identification information of the second terminal device, and the periodicity information, wherein the measurement result indicates the relative position between the first terminal device and the second terminal device.

11. The method according to claim 10, wherein

the first request further comprises one or more of the following: a measurement result type, a quality of service requirement, and first indication information; and/or the second request further comprises one or more of the following: a measurement result type, a quality of service requirement, and first indication information, wherein the measurement result type comprises one or more of the following: a distance, a direction, and an angle; the quality of service requirement comprises one or more of the following: a precision requirement, a latency requirement, a reliability requirement, and an integrity requirement of the measurement result; and the first indication information indicates to perform measurement by using the assistance terminal device.

12. The method according to claim 10 or 11, wherein the receiving, by the first terminal device, a second measurement result from one or more second assistance terminal devices comprises:

receiving, by the first terminal device, a discovery request from one or more assistance terminal devices, wherein the one or more assistance terminal devices are terminal devices that receive the second request; determining, by the first terminal device, the one or more second assistance terminal devices based on the one or more assistance terminal devices; sending, by the first terminal device, a discovery response to the one or more second assistance terminal devices; and receiving, by the first terminal device, the second measurement result from the one or more second assistance terminal devices.

13. A positioning method, comprising:

receiving, by a first assistance terminal device, a first request from a first terminal device, wherein the first request is used to request a relative position between the first terminal device and a second terminal device, the first request comprises identification information of the second terminal device and periodicity information, and the periodicity information indicates a measurement periodicity; sending, by the first assistance terminal device, a first measurement result to the first terminal device, wherein the measurement result indicates the relative position between the first terminal device and the second terminal device; and if the first assistance terminal device cannot perform assistive measurement in a next measurement periodicity, sending, by the first assistance terminal device, a second request, wherein the second request is used to request a second assistance terminal device to assist in determining the relative position between the first terminal device and the second terminal device, and the second request comprises identification information of the first terminal device, the identification information of the second terminal device, and the periodicity information.

14. The method according to claim 13, wherein

the first request further comprises one or more of the following: a measurement result type, a quality of service requirement, and first indication information; and/or the second request further comprises one or more of the following: a measurement result type, a quality of service requirement, and first indication information, wherein the measurement result type comprises one or more of the following: a distance, a direction, and an angle; the quality of service requirement comprises one or more of the following: a precision requirement, a latency requirement, a reliability requirement, and an integrity requirement of the measurement result; and the first indication information indicates to perform measurement by using the assistance terminal device.

15. The method according to claim 13 or 14, wherein the method further comprises:

if a second condition is met, determining, by the first assistance terminal device, that the assistive measurement cannot be performed in the next measurement periodicity, wherein
the second condition comprises one or more of the following: a distance between the first terminal device and the first assistance terminal device is greater than or equal to a preset distance, a moving speed of the first terminal device relative to the first assistance terminal device is greater than or equal to a preset speed, signal strength of a second signal is less than or equal to preset signal strength, and a difference between a direction of the second signal and a preset direction is greater than or equal to a preset difference, wherein the second signal is a signal received by the first assistance terminal device from the first terminal device.

16. The method according to claim 15, wherein the method further comprises:
periodically determining, by the first assistance terminal device based on the second condition, whether assistive measurement is supported in the next measurement periodicity.

17. The method according to any one of claims 13 to 16, wherein the sending, by the first assistance terminal device, a second request to the one or more second assistance terminal devices comprises:

broadcasting, by the first assistance terminal device, the second request; or
determining, by the first assistance terminal device, the one or more second assistance terminal devices from one or more assistance terminal devices, and sending the second request to the one or more second assistance terminal devices.

18. The method according to any one of claims 13 to 17, wherein the method further comprises:

receiving, by the first assistance terminal device, a second measurement result from the one or more second assistance terminal devices; and
sending, by the first assistance terminal device, the second measurement result to the first terminal device.

19. The method according to any one of claims 13 to 17, wherein the method further comprises:
receiving, by the first assistance terminal device, third indication information from the second assistance terminal device, wherein the third indication information indicates that the second assistance terminal device determines to perform assistive measurement based on the second request.

20. A positioning method, comprising:

receiving, by a second assistance terminal device, a second request from a first assistance terminal device, wherein the second request is used to request the second assistance terminal device to assist in determining a relative position between a first terminal device and a second terminal device, the second request comprises identification information of the first terminal device, identification information of the second terminal device, and periodicity information, and the periodicity information indicates a measurement periodicity; and
sending, by the second assistance terminal device, a second measurement result to the first terminal device or the first assistance terminal device based on the second request, wherein the measurement result indicates the relative position between the first terminal device and the second terminal device.

21. The method according to claim 20, wherein

the second request further comprises one or more of the following: a measurement result type, a quality of service requirement, and first indication information, wherein
the measurement result type comprises one or more of the following: a distance, a direction, and an angle; the quality of service requirement comprises one or more of the following: a precision requirement, a latency requirement, a reliability requirement, and an integrity requirement of the measurement result; and the first indication information indicates to perform measurement by using the assistance terminal device.

22. The method according to claim 20 or 21, wherein the sending, by the second assistance terminal device, a second measurement result to the first terminal device based on the second request comprises:

sending, by the second assistance terminal device, a discovery request to the first terminal device;
receiving, by the second assistance terminal device, a discovery response from the first terminal device; and
sending, by the second assistance terminal device, the second measurement result to the first terminal device based on the discovery response of the first terminal device and the second request.

23. The method according to any one of claims 20 to 22, wherein if the second assistance terminal device sends the second measurement result to the first terminal device based on the second request, the method further comprises:

sending, by the second assistance terminal device, third indication information to the first assistance terminal device, wherein the third indication information indicates that the second assistance terminal device determines to perform assistive measurement based on the second request.

24. A communication apparatus, wherein the communication apparatus comprises a processor, and the processor is configured to run a computer program or instructions, to enable the communication apparatus to perform the positioning method according to any one of claims 1 to 5, perform the positioning method according to any one of claims 6 to 9, perform the positioning method according to any one of claims 10 to 12, perform the positioning method according to any one of claims 13 to 19, or perform the positioning method according to any one of claims 20 to 23.

25. A computer-readable storage medium, wherein the computer-readable storage medium stores computer instructions or a program, and when the computer instructions or the program is run on a computer, the positioning method according to any one of claims 1 to 5 is performed, the positioning method according to any one of claims 6 to 9 is performed, the positioning method according to any one of claims 10 to 12 is performed, the positioning method according to any one of claims 13 to 19 is performed, or the positioning method according to any one of claims 20 to 23 is performed.

26. A computer program product, wherein the computer program product comprises computer instructions, and when a part or all of the computer instructions are run on a computer, the positioning method according to any one of claims 1 to 5 is performed, the positioning method according to any one of claims 6 to 9 is performed, the positioning method according to any one of claims 10 to 12 is performed, the positioning method according to any one of claims 13 to 19 is performed, or the positioning method according to any one of claims 20 to 23 is performed.

27. A communication apparatus, comprising a module configured to perform the method according to any one of claims 1 to 5, claims 6 to 9, claims 10 to 12, claims 13 to 19, or claims 20 to 23.

FIG. 1

FIG. 2

Device A    Device B

$t_1$

$t_2$

$t_3$

$t_4$

Simple diagram of a time
sequence  of one single-sided
two-way ranging procedure

$t_1$

$t_4$

Device A    TX    Poll    RX    Resp

t

Device B    RX    Poll    TX    Resp

$t_2$

$t_3$

One single-sided two-way
ranging procedure (in a data
packet form)

FIG. 3

Device A    Device B

$t_1$

$t_2$

$t_3$

$t_4$

$t_5$

$t_6$

Simple diagram of a
time sequence of one
single-sided two-way
ranging procedure

$t_1$

$t_4$

$t_5$

Device A    TX    Poll    RX    Resp    TX    Poll

t    t    t

Device B    RX    Poll    TX    Resp    RX    Poll

$t_2$

$t_3$

$t_6$

One single-sided two-way ranging
procedure (in a data packet form)

FIG. 4

×

Reference
terminal device    NLOS    Target terminal
device

Assistance
terminal device 1

Assistance
terminal device 2

Assistance
terminal device 3

FIG. 5

| Target terminal device | Assistance terminal device | Reference terminal device | Policy control network element |
|---|---|---|---|

Obtain ranging/sidelink positioning authorization based on an authorization and policy configuration sent by the policy control network element

The target terminal device actively initiates a discovery procedure for the assistance terminal device

The target terminal device sends a ranging request to the reference terminal device

The target terminal device performs ranging measurement once with the assistance terminal device

The reference terminal device performs ranging measurement once with the assistance terminal device

Send a measurement result to the target terminal device

The target terminal device obtains a ranging/sidelink positioning result between the target terminal device and the reference terminal device through calculation by comprehensively considering two measurement results

FIG. 6

| Target terminal device/Reference terminal device | Assistance terminal device 1 | Third-party terminal device | Assistance terminal device 2 |
|---|---|---|---|

701: Receive a discovery message from one or more assistance terminal devices

701: Receive a discovery message from one or more assistance terminal devices

702: The third-party terminal device establishes a PC5 connection to the assistance terminal device

703: Send a PC5 message

704: The assistance terminal device executes an authentication procedure

705: The assistance terminal device separately performs ranging/ sidelink positioning measurement on the target terminal device and the reference terminal device

706: The assistance terminal device determines a ranging/ sidelink positioning result between the target terminal device and the reference terminal device

707: Send a PC5 message

708: Perform event detection, and if a corresponding event is detected, perform step 705 to step 708 again

FIG. 7

FIG. 8

FIG. 9

| First assistance terminal device | First terminal device | Second assistance terminal device |
|---|---|---|

1001: Send a first request

1002: Send a first measurement result

1003: If the first terminal device determines that the first assistance terminal device cannot perform assistive measurement in a next measurement periodicity, send the first request to the second assistance terminal device

1003a: If a first condition is met, determine that the first assistance terminal device cannot perform assistive measurement in the next measurement periodicity

1003a': If a second condition is met, determine that the assistive measurement cannot be performed in the next measurement periodicity

1003b': If the first assistance terminal device cannot perform assistive measurement in the next measurement periodicity, send second indication information

1003c': Determine, based on the second indication information, that the first assistance terminal device cannot perform assistive measurement in the next measurement periodicity

1004: Send a second measurement result

1005: Determine whether the second assistance terminal device supports assistive measurement in the next measurement periodicity; and if it is determined that the second assistance terminal device supports assistive measurement in the next measurement periodicity, perform step 1006; or if it is determined that the second assistance terminal device does not support assistive measurement in the next measurement periodicity, perform step 1007

1006: Periodically send the second measurement result

1007: Send the first request to a third assistance terminal device

FIG. 10

| First assistance terminal device | First terminal device | | Second assistance terminal device |
|---|---|---|---|

1101: Send a first request

1102: Send a first measurement result

1103: If the first assistance terminal device cannot perform assistive measurement in a next measurement periodicity, the first assistance terminal device sends a second request

1104: Send a second measurement result based on the second request

1105: Send a second measurement result based on the second request

1106: Send the second measurement result

FIG. 11

| First assistance terminal device | First terminal device | | Second assistance terminal device |
|---|---|---|---|

1201: Send a first request

1202: Send a first measurement result

1203: If the first assistance terminal device cannot perform assistive measurement in a next measurement periodicity, the first assistance terminal device sends a third request

1204: Send a second measurement result based on a second request

1205: Send the second measurement result

FIG. 12

Terminal device
130

Transceiver module
1301

Processing module
1302

FIG. 13

Communication apparatus 140

Logic circuit
1401

Interface circuit
1402

Memory 1403

FIG. 14

## INTERNATIONAL SEARCH REPORT

International application No.

**PCT/CN2023/099533**

### A. CLASSIFICATION OF SUBJECT MATTER

H04W4/02(2018.01)i

According to International Patent Classification (IPC) or to both national classification and IPC

### B. FIELDS SEARCHED

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 边链, 侧链, 副链, 侧行, 测距, 定位, 发现, 辅助, 协助, 选择, 重选, 更换, 切换, 第二, 新, 周期, sidelink, SL, ranging, positioning, assistance, discovery, reselect, change, select, distance, another, new, cycle, period, continuity

### C. DOCUMENTS CONSIDERED TO BE RELEVANT

| Category* | Citation of document, with indication, where appropriate, of the relevant passages | Relevant to claim No. |
|---|---|---|
| PX | HUAWEI et al. "TR 23.700-86: KI#2, New Solution: Service continuity of periodic ranging with assistant UE" <br> *3GPP TSG-WG SA2 Meeting #152E e-meeting S2-2206055*, 10 August 2022 (2022-08-10), section 2 | 1-27 |
| A | XIAOMI. "KI#2, New solution: Ranging/Sidelink positioning with the assistance of assistant UE" <br> *3GPP TSG-SA WG2#151E e-meeting S2-2204677*, 06 May 2022 (2022-05-06), section 2 | 1-27 |
| A | WO 2022067708 A1 (LENOVO BEIJING LTD.) 07 April 2022 (2022-04-07) <br> entire document | 1-27 |
| A | CN 112040396 A (BEIJING XIAOMI MOBILE SOFTWARE CO., LTD.) 04 December 2020 (2020-12-04) <br> entire document | 1-27 |

☑ Further documents are listed in the continuation of Box C. ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **09 August 2023** | **24 August 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

<table>
<tr><td colspan="2">International application No.</td></tr>
<tr><td colspan="2">**PCT/CN2023/099533**</td></tr>
</table>

**C. DOCUMENTS CONSIDERED TO BE RELEVANT**

| Category* | Citation of document, with indication, where appropriate, of the relevant passages | Relevant to claim No. |
|---|---|---|
| A | CN 112351383 A (DATANG MOBILE COMMUNICATIONS EQUIPMENT CO., LTD.) 09 February 2021 (2021-02-09)<br>entire document | 1-27 |

Form PCT/ISA/210 (second sheet) (July 2022)

## INTERNATIONAL SEARCH REPORT
### Information on patent family members

| International application No. |
| --- |
| **PCT/CN2023/099533** |

| Patent document cited in search report | | | Publication date (day/month/year) | Patent family member(s) | | | Publication date (day/month/year) |
| --- | --- | --- | --- | --- | --- | --- | --- |
| WO | 2022067708 | A1 | 07 April 2022 | None | | | |
| CN | 112040396 | A | 04 December 2020 | None | | | |
| CN | 112351383 | A | 09 February 2021 | CN | 112351383 | B | 22 July 2022 |

Form PCT/ISA/210 (patent family annex) (July 2022)

**REFERENCES CITED IN THE DESCRIPTION**

**Patent documents cited in the description**

- CN 202210916867